# EUROPEAN PATENT APPLICATION

(11) **EP 1 262 215 A2**
(43) Date of publication of application: **04.12.2002**
(21) Application number: 02011646.3
(22) Date of filing: 29.05.2002
(51) Int. Cl.: A63F 13/12

(54) **Server device for net game, net game management method, net game mamagement program, and recording medium which stores net game**

(30) Priority: 29.05.2001 JP 2001161341; 29.05.2001 JP 2001161342; 30.05.2001 JP 2001162864
(71) Applicant: Konami Computer Entertainment Osaka, Inc., Osaka-shi, Osaka-fu (JP)
(72) Inventor: Takahashi, Hidehisa, chome, Kita-ku, Osaka-shi, Osaka-fu (JP); Ishikawa, Tatsuya, chome, Kita-ku, Osaka-shi, Osaka-fu (JP); Namba, Kazuhiro, chome, Kita-ku, Osaka-shi, Osaka-fu (JP)
(74) Representative: Müller-Boré & Partner Patentanwälte

(57) **Abstract**

The present invention provides a server device for net games which can decide a winner out of a large number of users in a short time without wasting the time of the users. The lobby server 13 detects the winners of the normal pennant who are accessing using the client computers 2, decides the pairing in the games for the winners of the normal pennant whose access was detected, and sequentially decides the pairing in the following games for the winners of the normal pennant who won the games which were played according to the decided pairing in the games.

## Description

### BACKGROUND OF THE INVENTION

### 1. Field of the Invention

The present invention relates to a server device for net games (or network games) which is communicably connected to a plurality of terminal devices used by users via a network for managing a game played in a game space by the users using the terminal devices, a network game management method, a net game management program used for this device, and a recording medium which stores a net game management program.

### 2. Description of the Related Art

Today as the Internet becomes popular and data transfer speeds increase, net games (or network games) using server devices for net games, and terminal devices used by users which are connected via the Internet, are commonly played. With such net games, various matching games, including sports and physical combat, are played.

In the case of the above mentioned matching games, an unspecified number of general users can participate in a game as players since the Internet is used. When unknown users match in this way, the capability of an opponent in a game is unknown, so unexpectedness is added to the progress of a game, and some excitement can be added to a game compared with normal games which use a standalone game machine, where a game is played with the game machine as the opponent.

However, when many players play the above mentioned matching game and a winner is determined, it is possible to decide a winner by tournament, for example, but to play a tournament, the schedule of each game must be decided, and the users to be an opponent must access according to the decided schedule. Net games, however, have a characteristic in that users can voluntarily participate in a game, so it frequently occurs that a user to be an opponent does not access at a predetermined time. Therefore a tournament often cannot run smoothly, and a winner cannot be decided.

To play the above tournament, the second game cannot be played until the winner of the first game is decided. So if a user who became a winner after a short game time and a user who became a winner after a long game time play a game together, the user who became a winner after a short time must wait for a long time until the user to be an opponent is decided, and the time of the former user is wasted. Such a waste of time forces the user unnecessary expense when the charge to use a communication line is high, and is the cause of users not to become enthusiastic about net games.

### SUMMARY OF THE INVENTION

To solve the above problems, it is an object of the present invention to provide a server device for net games which can decide a winner out of many users in a short time without wasting the time of the user, and a net game management program, and a net game management method using this device.

The present invention relates to a server device for net games, which is communicably connected to a plurality of terminal devices used by users via a network for managing a game played in a game space by the users using the terminal devices. The server device comprises detecting means for detecting users who are accessing using the terminal devices, and pairing deciding means for deciding a pairing in the games for users whose access was detected by the detecting means, and sequentially deciding a pairing in the next games for users who won the games played according to the decided pairing in the games.

According to the present invention as described in the above, the server device for net games which is communicably connected to a plurality of terminal devices used by users via a network for managing a game played in a game space by the users using the terminal devices, comprises detecting means for detecting users who are accessing using the terminal devices, and pairing deciding means for deciding a pairing in the games for users whose access was detected by the detecting means, and sequentially deciding a pairing in the next games for users who won the game played according to the decided pairing in the games.

In other words, users who are accessing using the terminal devices are detected, a pairing in the games is decided for the detected users, and the game is played according to the decided pairing in the games, and for the user who won as a result, the pairing of the following games is sequentially decided. Therefore, a user who will be an opponent is always accessing, so they can play a game immediately, and a winner of each game can be decided in a short time. Also a pairing in the next game is immediately decided for the user who won, so games can be sequentially played and many games can be played consecutively in a short time.

These and other objects, features, and advantages of the present invention will become more apparent upon reading the following detailed description along with the accompanying drawings.

### BRIEF DESCRIPTION OF THE DRAWINGS

Fig. 1 is a block diagram depicting a configuration of the net game system using a server system according to an embodiment of the present invention;
Fig. 2 shows the major functional blocks of the server system shown in Fig. 1;
Fig. 3 is a diagram depicting an example of the mode select screen;
Fig. 4 is a diagram depicting an example of the sub-menu screen;
Fig. 5 is a diagram depicting an example of the pennant lobby screen;
Fig. 6 is a diagram depicting an example of the member ID and password input screen;
Fig. 7 is a diagram depicting an example of the pennant select screen;
Fig. 8 is a flow chart depicting an example of normal pennant registration processing by the server system and client computer shown in Fig. 1;
Fig. 9 is a diagram depicting an example of the input screen for the desired start time and the schedule notification destination mail address of the normal pennant;
Fig. 10 is a diagram depicting an example of the team select screen;
Fig. 11 is a flow chart depicting an example of normal pennant creation processing by the server system shown in Fig. 1;
Fig. 12 is a diagram depicting an example of the friend pennant menu screen;
Fig. 13 is a flow chart depicting friend pennant creation processing by the server system and client computer shown in Fig. 1;
Fig. 14 is a diagram depicting an example of the input screen for the desired start time, number of players to be set, member ID, schedule notification destination address, password and password for cancellation;
Fig. 15 is a diagram depicting an example of the input screen for the self mail address and password notification target mail address;
Fig. 16 is a flow chart depicting an example of friend pennant registration processing by the server system and client computer shown in Fig. 1;
Fig. 17 is a diagram depicting an example of the input screen for the member ID of sponsor, password, and schedule notification destination mail address;
Fig. 18 is a flow chart depicting an example of friend pennant schedule notification processing by the server system shown in Fig. 1;
Fig. 19 is a flow chart depicting an example of friend pennant cancellation processing by the server system and client computer shown in Fig. 1;
Fig. 20 is a diagram depicting an example of the input screen for the password and password for cancellation;
Fig. 21 is a diagram depicting an example of the number of participants confirmation screen; and
Fig. 22 is a flow chart depicting an example of outcome deciding processing by the server system shown in Fig. 1; and
Fig. 23 is a flow chart depicting summit pennant progression processing by the server system shown in Fig. 1.

### DESCRIPTION OF THE PREFERRED EMBODIMENTS

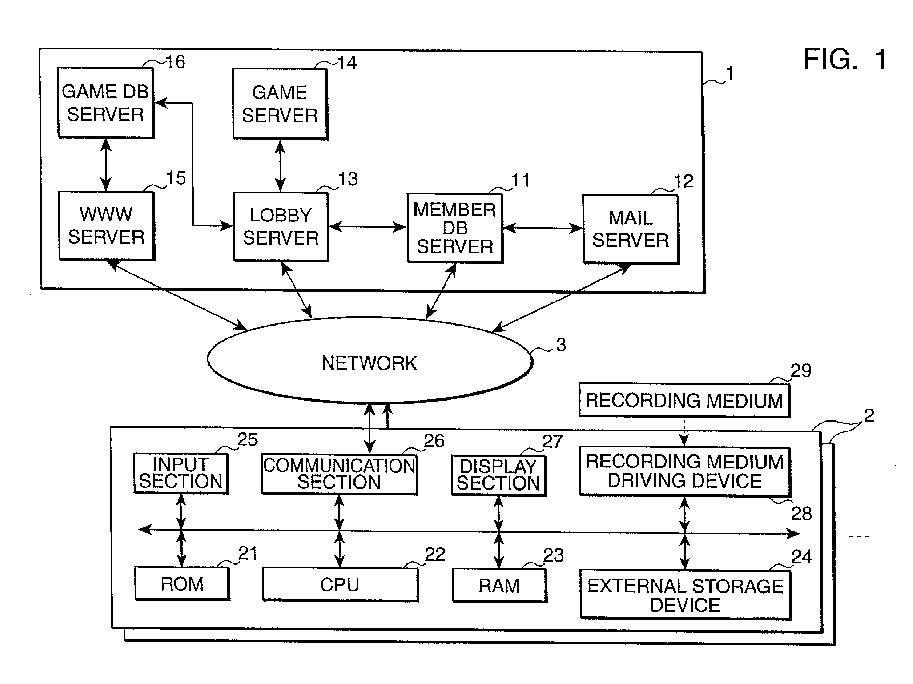

A net game system using a server system according to an embodiment of the present invention will now be described with reference to the accompanying drawings. Fig. 1 is a block diagram depicting a configuration of a net game system using the server system according to an embodiment of the present invention.

In the following description, a baseball game, when a plurality of registered members form a league and play league baseball games and a final winner is decided out of the winners of each league baseball game according to the battle royal system, which will be described later, is described as an example of a net game, but the present invention is not limited by this example, but can be suitably used for such sport games as soccer, volley ball and basket ball, where a league is formed and games are played. The present invention is not limited to these examples, but can also be applied to various games if the game is for deciding a winner out of many users, such as other sport games, physical combat games, simulation games, shooting games and role playing games.

The net game shown in Fig. 1 comprises a server system 1 and a plurality of client computers 2. The server system 1 and the plurality of client computers 2 are communicably inter-connected via a network 3. Each client computer 2 is a terminal device used by a member user, and the server system 1 is a server device for net games where a member manages a baseball game played in a game space using the client computer 2.

The Internet, for example, is used for the network 3, and various information is transmitted/received between the server system 1 and the client computer 2 according to TCP/IP (Transmission Control Protocol/Internet Protocol). The network 3 is not limited to the Internet, but another network, such as an intranet, or a network combining various networks including the Internet and an intranet may be used. The server system 1 and client computers 2 may be inter-connected by a leased line.

When the Internet is used as the network 3, each client computer 2 is usually connected to a predetermined provider server via a modem, and is connected to the network 3 via this provider server, but to simplify description, the provider server is not illustrated and not described here.

In the present embodiment, the user who uses the client computer 2 is a member who registered to receive a predetermined service provided by a company who manages the net game, and can register to the pennant managed by the server system 1 using the client computer 2.

Here in the present embodiment, a baseball game is played as the net game, and pennant means a league baseball game which is a contest for a pennant. Pennants have a normal pennant, a friend pennant, and a summit pennant. A normal pennant is a league baseball game played by normal leagues for which league members are automatically decided by the server system 1. A friend pennant is a league baseball game played by member limited leagues created by the server system 1, so that only members who know the password, which is a keyword for creation used for creating a friend pennant, become league members of the league.

The summit pennant is a pennant race where the winners of each normal pennant get together to play at a predetermined time, and a final winner is decided by the battle royal system. The battle royal system is a game system wherein only winners sequentially play a game, and the user who survives the final game becomes the winner (or final winner).

Each member accesses the server system 1 using the client computer 2 according to the game schedule of the registered normal pennant or friend pennant, and plays a league baseball game based on the normal pennant or friend pennant, just like a normal baseball game, in a game space constructed by the server system 1 and client computer 2. Then the winner of each normal pennant sequentially plays a game, just like a normal baseball game, in the above mentioned game space according to the battle royal system, so as to decide the winner (final winner) of the summit pennant.

Now the server system 1 will be described in detail. The server system 1 comprises a member DB (data base) server 11, mail server 12, lobby server 13, game server 14, WWW (World Wide Web) server 15, and game DB server 16. Each server is connected by such a predetermined network as a LAN (Local Area Network), so that data can be transmitted/received according to the illustrated paths. The member DB server 11, mail server 12, lobby server 13 and WWW server 15 are connected to the network 3 via a communication unit such as a router (not illustrated), for example.

The member DB server 11 is comprised of a normal data base server device, and executes member registration processing for a user when the user registers for membership to receive a predetermined service provided by a company managing the network game. The member DB server 11 stores the member ID, password, and accounting information of each member which are decided at membership registration in the data base and manages the information.

The mail server 12 is comprised of a normal mail server device, and sends various electronic mail to members according to the instructions from another server. For example, the mail server 12 sends the game schedule of a normal pennant and friend pennant by electronic mail to each member registered in the normal pennant and friend pennant. The mail server 12 uses the electronic mail addresses which the sponsor of the friend pennant sent along with a password, and sends the password to the other members who this member requests to participate in the friend pennant by electronic mail.

The lobby server 13 is comprised of a normal server device, and executes various lobby processing as a portal site to play net games. For example, when a member accesses using the client computer 2 to play a net game, the lobby server 13 executes authentication processing for the member who accessed, referring to the member ID and password stored in the member DB server 11. The lobby server 13 also executes the normal pennant registration processing and friend pennant registration processing for the member to register the normal pennant and friend pennant.

When a member, who registered in a normal pennant or friend pennant, accesses using the client computer 2 to play a game, the lobby server 13 guides the member to the pennant lobby where the normal pennant or friend pennant is played from a plurality of lobbies, and guides the member to a league where the member plays a game from the pennant lobby where the member was guided.

When the winners of each normal pennant are accessing using the client computers 2 at a predetermined time when the summit pennant is played, the lobby server 13 detects the winners in accessing status, decides the pairing in the games for the winners in accessing status, and sequentially decides the pairing in the following games for the winners who won the games according to the above mentioned pairing in the games decided above.

The game server 14 is comprised of a normal server device, and performs net game progression processing for progressing the net game in a game space where the member plays a game. At this time, the game server 14 transmits/receives data required for the progression of the net game to/from the client computer 2 via the lobby server 13.

The game DB server 16 is comprised of a normal data base server device, stores various information on the net game, such as game outcome, which the client computer 2 sent via the lobby server 13, in the data base, and manages the information.

The game DB server 16 also stores various information on the normal pennant, friend pennant and summit pennant in the data base, and manages the information. For example, the game DB server 16 stores the password for creating the friend pennant which the member sent using the client computer 2 and the password for cancellation, which is a keyword for cancellation used for canceling the friend pennant.

The WWW server 15 is comprised of a normal WWW server device, creates ranking data from the data on game outcome stored in the game DB server 16, and lists the created ranking data on a predetermined home page so that the ranking data can be read from the client computer 2.

Now the client computer 2 will be described in detail. Each client computer 2 is comprised of a normal personal computer, which includes a ROM (Read Only Memory) 21, CPU (Central Processing Unit) 22, RAM (Random Access Memory) 23, external storage device 24, input section 25, communication section 26, display section 27, and recording medium driving device 28.

Each block of the client computer 2 is connected to the internal bus, various data is input/output onboard the client computer 2 via this bus, and various processings for playing the net game are executed under the control of the CPU 22.

A basic program for operating the client computer 2 has been stored in the ROM 21. The RAM 23 is used for the work area of the CPU 22. The recording medium 29 is a recording medium which can be read by a computer, such as a CD-ROM. The CD-ROM is provided by a software manufacturer who creates net games, and stores the game progression program at the client side for a member to play a baseball game in a game space.

The recording medium driving device 28 is comprised of a CD-ROM drive, where the game progression program at the client side is read from the recording medium 29 under the control of the CPU 22, and the game progression program at the client side is installed in the external storage device 24 if necessary.

The recording medium 29 is not limited to the above mentioned example, but if another recording medium driving device, such as a DVD drive or floppy disk drive, is added, the game progression program at the client side may be installed in the external storage device using another recording medium which the computer can read, such as a DVD or floppy disk. If the game progression program at the client side can be downloaded from a home page of a software manufacturer via a network 3, then the game progression program at the client side may be directly downloaded from this home page to the external storage device 24.

The external storage device 24 is comprised of such an external storage device as a hard disk drive. In the external storage device 24, the game progression program at the client side is installed as mentioned above, and various programs, including a browser program used for reading Web contents on the Web and a moving picture reproducing program for reproducing 3-dimensional moving pictures according to the game progression program, have been installed by a normal method.

For the browser program here, Internet Explorer by Microsoft, for example, can be used. And for the moving picture reproducing program, DirectX by Microsoft, for example, can be used.

The CPU 22 reads the basic program from the ROM 21, and reads the game progression program and moving picture reproducing program at the client side from the external storage deice 24, executes game progression processing for playing a normal pennant, friend pennant and summit pennant, and transmits/receives necessary data to/from the server system 1 using the communication section 26.

The CPU 22 reads the browser program from the external storage device 24, executes game progression processing at the client side for registering a normal pennant or friend pennant using the game progression program and browser program, and transmits/receives necessary data to/from the server system 1 using the communication section 26.

The input section 25 is comprised of a keyboard and mouse, and in the present embodiment, various instructions are input primarily using the mouse according to the operation of the member. The communication section 26 is comprised of a modem or a router, and controls communication with the server system 1 via the network 3. The display section 27 is comprised of a CRT (Cathode Ray Tube) or liquid crystal display, and displays various screens used for a net game as still pictures or moving pictures under the control of the CPU 22.

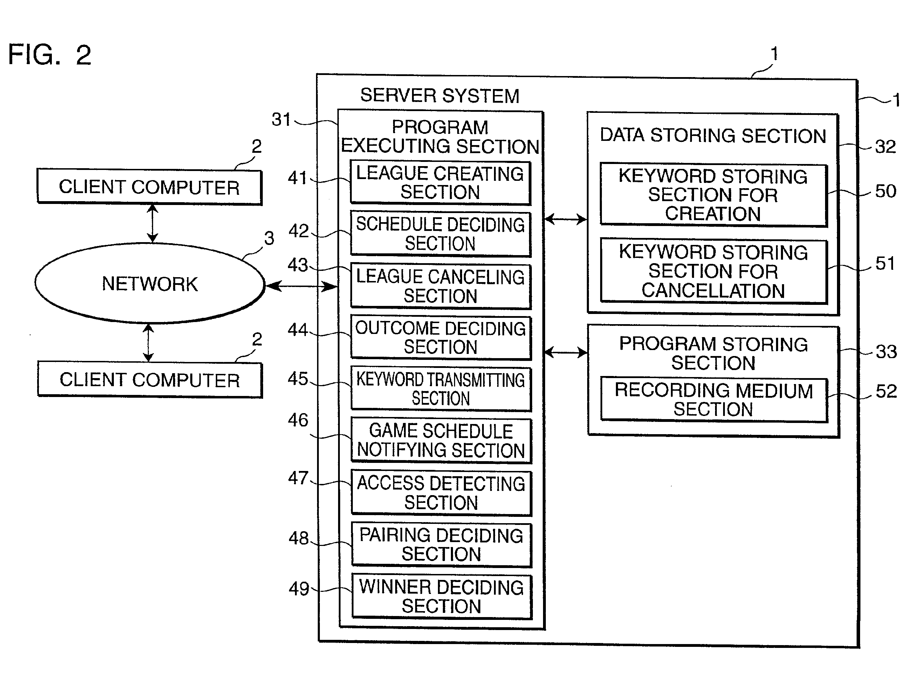

Now the major functions of the server system 1 configured as above will be described. Fig. 2 shows the major functional blocks of the server system 1 shown in Fig. 1.

As Fig. 2 shows, the server system 1 functionally includes the program executing section 31, data storing section 32, and program storing section 33. The program executing section 31 functionally includes the league creating section 41, schedule deciding section 42, league canceling section 43, outcome deciding section 44, keyword transmitting section 45, game schedule notifying section 46, access detecting section 47, pairing deciding section 48, and winner deciding section 49. The data storing section 32 functionally includes the keyword storing section for creation 50, and keyword storing section for cancellation 51. And the program storing section 33 functionally includes the recording medium 52 which can be read by a computer.

The program executing section 31 is comprised of CPUs (not illustrated) of each server 11- 16 constituting the server system 1, and these CPUs function as the league creating section 41, schedule deciding section 42, league canceling section 43, outcome deciding section 44, keyword transmitting section 45, game schedule notifying section 46, access detecting section 47, pairing deciding section 48, and winner deciding section 49 by executing various programs stored in the recording medium 52.

The data storing section 32 is comprised of the game DB server 16. The keyword storing section for creation 50 stores a password which is a keyword for creation which a member sent using the client computer 2. The keyword storing section for cancellation 51 stores a password for cancellation, which is a keyword for cancellation which a member sent using the client computer 2.

The program storing section 33 is comprised of hard disk drives (not illustrated) of each server 11 - 16 of the server system 1, and in this case the recording medium 52 is comprised of a hard disk. The recording medium 52 records the normal pennant registration program, normal pennant creation program, friend pennant creation program, friend pennant registration program, friend pennant schedule notification program, friend pennant cancellation program, outcome decision program, summit pennant progression program, other game progression programs at the server side, and other programs in a state which the computer can read.

The recording medium 52 is not limited to the above mentioned example, but another recording medium which can be read by a computer, such as a CD-ROM, DVD and floppy disk may be used if another recording medium driving device is installed, such as a CD-ROM drive, DVD drive and floppy disk drive, and each of the above mentioned programs may be downloaded and stored in a hard disk via the network 3.

The league creating section 41 is implemented primarily by the CPU of the lobby server 13 executing the normal pennant registration program, normal pennant creation program, friend pennant creation program, and friend pennant registration program.

The league creating section 41 decides a predetermined number of individuals, 6 or 3, out of a plurality of members who accessed using the client computer 2 as league members, and sequentially creates a normal league and member limited league which consists of the decided league members. Also when the league creating section 41 creates a member limited league, the league creating section 41 creates the member limited league so that only the member who sent a password which matches the password stored in the keyword storing section for creation 47 becomes a league member.

The schedule deciding section 42 is implemented primarily by the CPU of the lobby server 13, executing the normal pennant creation program and friend pennant schedule notification program. The schedule deciding section 42 decides the schedule of the normal pennant and friend pennant so that each league member of the league created by the league creating section 41 plays at least one game with all the other league members. Also the schedule deciding section 42 decides the schedule of the normal pennant and friend pennant based on the desired start time requested by the members when the schedule of the normal pennant is decided.

The league canceling section 43 is implemented primarily by the CPU of the lobby server 13, executing the friend pennant cancellation program. When a member sends a password for cancellation which matches the password for cancellation stored in the keyword storing section for cancellation 48 using the client computer 2, the league canceling section 43 cancels the member limited league created by the league creating section 41.

When a member who sent the password for cancellation using the client computer 2 selects to participate in a normal pennant, the league canceling section 43 cancels the member limited league created by the league creating section 41, and the league creating section 41 creates a normal league where this member and other arbitrarily selected members are the league members.

The outcome deciding section 44 is implemented primarily by the CPU of the lobby server 13, executing the outcome decision program. If one of the members who is supposed to participate in this game has not accessed the server system 1 using the client computer 2 when a predetermined time has elapsed since the game start time specified by the game schedule, which is decided by the schedule deciding section 42, the outcome deciding section 44 decides the game loss of the member who has not accessed by default.

The keyword transmitting section 45 is implemented primarily by the CPU of the mail server 12, executing the friend pennant creation program. When one of the members, who is a sponsor, sends the electronic mail address of another member who the sponsor-user wants to have participate in the member limited league along with a password, the keyword transmitting section 45 sends the password by electronic mail using the transmitted electronic mail address.

The game schedule notifying section 46 is implemented primarily by the CPU of the mail server 12, executing the normal pennant creation program and friend pennant schedule notification program. The game schedule notifying section 46 notifies the game schedule decided by the schedule deciding section 42 to each league member of the normal league and the member limited league created by the league creating section 41 by electronic mail.

The access detecting section 47 is implemented primarily by the CPU of the lobby server 13, executing the summit pennant progression program. The access detecting section 47 detects the winners of each normal pennant who are accessing using the client computers 2 at a predetermined time when the summit pennant is held after the normal pennant period ends.

The pairing deciding section 48 is implemented primarily by the CPU of the lobby server 13, executing the summit pennant progression program. The pairing deciding section 48 decides the pairing in the games for the winners of each normal pennant whose access is detected by the access detecting section 47, and sequentially decides the pairing in the following games for the members who won the games which were played according to the decided pairing in the games.

The pairing deciding section 48 also does not decide the pairing in the games for the winners who selected to suspend the game out of the winners of the normal pennant whose access was detected by the access detecting section 47, and sequentially decides the pairing in the following games for the other winners.

The winner deciding section 49 is implemented primarily by the CPU of the lobby server 13, executing the summit pennant progression program. The winner deciding section 49 decides the winner of the normal pennant who won the largest number of games which were played according to the pairing in the games decided by the game deciding means 48 as the winner of the summit pennant.

According to the present embodiment, the lobby server 13 corresponds to the league creating means, schedule creating means, detecting means, game deciding means, and winner deciding means.

Now the operation of the net game system configured as above will be described. In the following description, it is assumed that the user has completed member registration to the member DB server 11, and the member ID and password of the member have been stored in the external storage device of the client computer 2 used by the member, and have also been stored in and managed by the member DB server 11. The use of the net game requires a fee, and according to the accounting status, it is assumed that the member has already paid a predetermined fee, and has the right to play the net game.

When the member starts up the game progression program at the client side using the mouse of the input section 25 of the client computer 2, the mode select screen for the member to select a desired mode out of a plurality of modes is displayed on the display section 27.

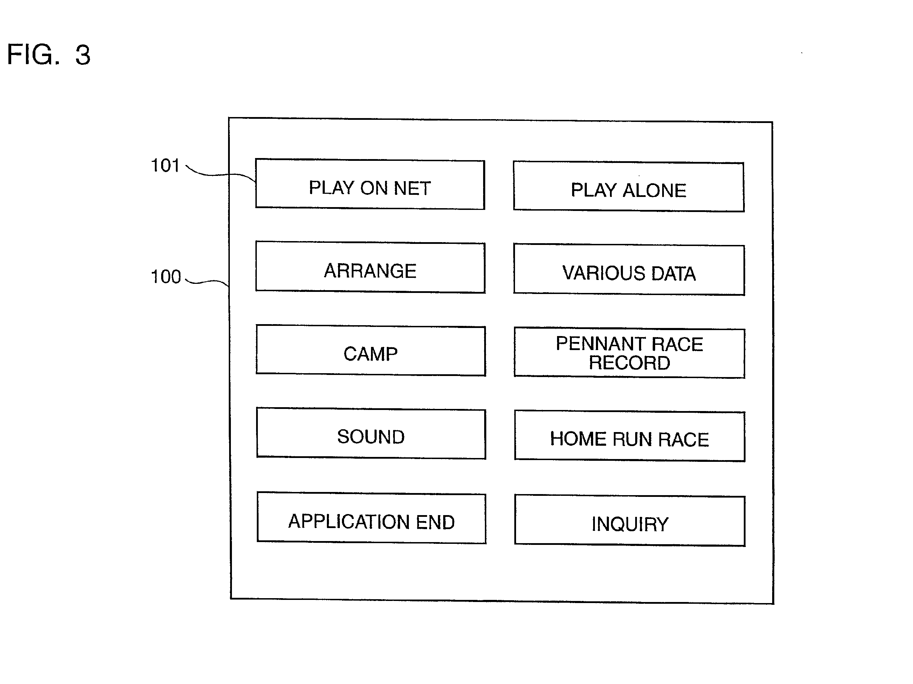

Fig. 3 is a diagram depicting an example of the mode select screen. For example, when the mode select screen 100 shown in Fig. 3 is displayed and the member selects the "Play on Net" button 101 using a mouse, the sub-menu screen for the member to select a pennant from a plurality of items in the sub-menu is displayed on the display section 27.

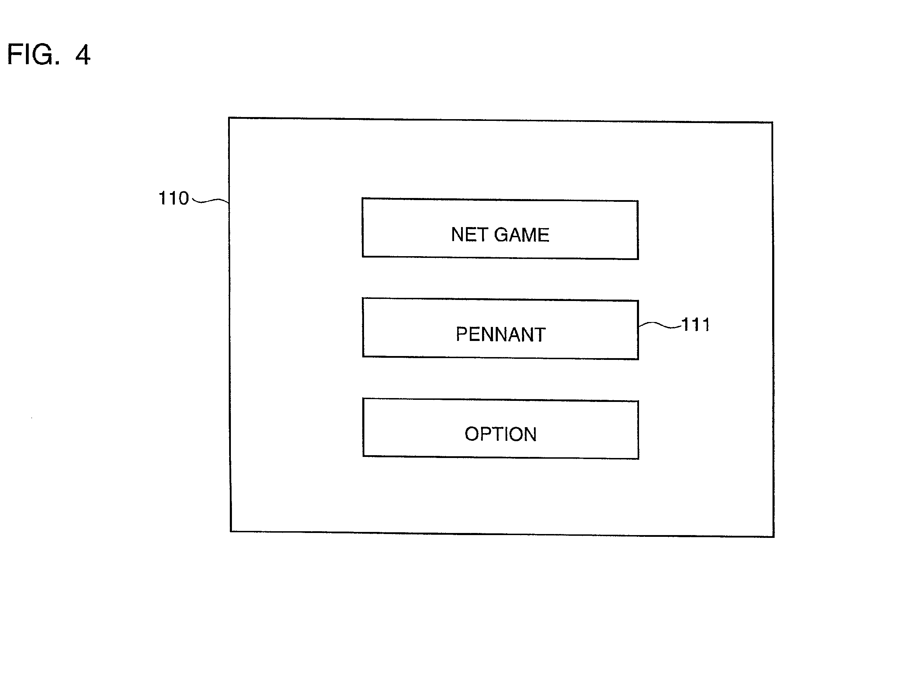

Fig. 4 is a diagram depicting an example of the sub-menu screen. For example, when the sub-menu screen 110 shown in Fig. 4 is displayed and the member selects the "Pennant" button 111 using the mouse, predetermined setup screens to perform various settings used for a baseball game are sequentially displayed.

When various settings using the above mentioned setup screen completes, the client computer 2 accesses the lobby server 13 via the network 3. When the net connection between the client computer 2 and the lobby server 13 has established, the client computer 2 sends the member ID and password stored in the external storage device 24 to the lobby server 13.

The lobby server 13 inquires the member DB server 11 whether the member to whom the received member ID and password have been assigned has the right to play a game, and the member DB server 11 checks the accounting status of the member specified by the member ID and password, then notifies the result on whether this member has the right to play a game to the lobby server 13.

In this case, the member has the right to play a game, so the member DB server 11 notifies the lobby server 13 that the member has the right to play a game, and the lobby server 13 sends data to display the pennant lobby screen for the member to register the pennant to the client computer 2.

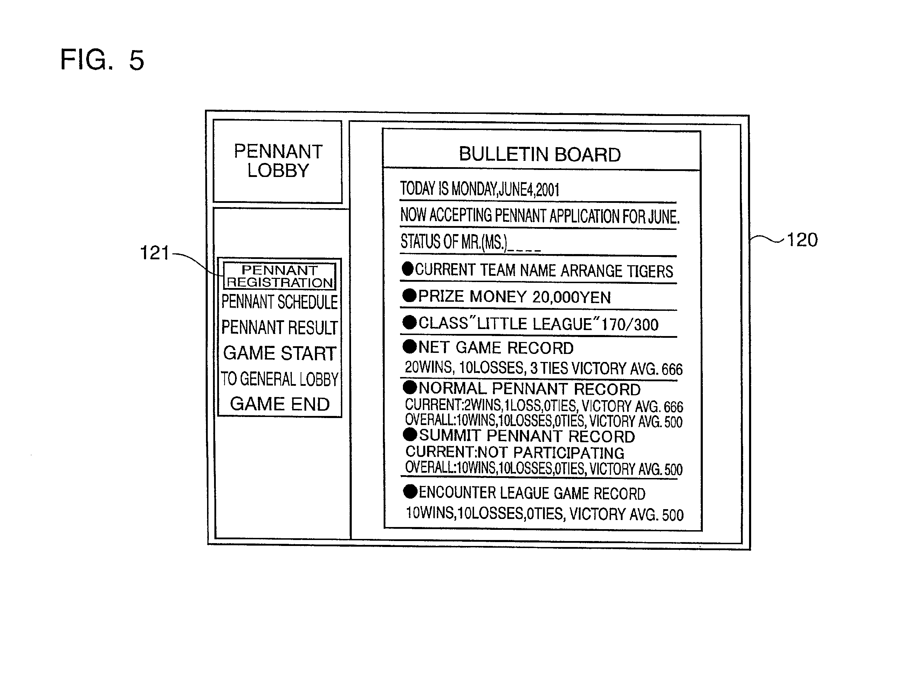

Fig. 5 is a diagram depicting an example of the pennant lobby screen. The client computer 2 displays the pennant lobby screen 120 shown in Fig. 5 on the display section 27 using the received data. If the member selects the "Pennant Registration" button 121 at this time using the mouse, the client computer 2 starts up the browser program, and displays the member ID and password input screen on the display section 27 using the browser screen for the member to input the member ID and password.

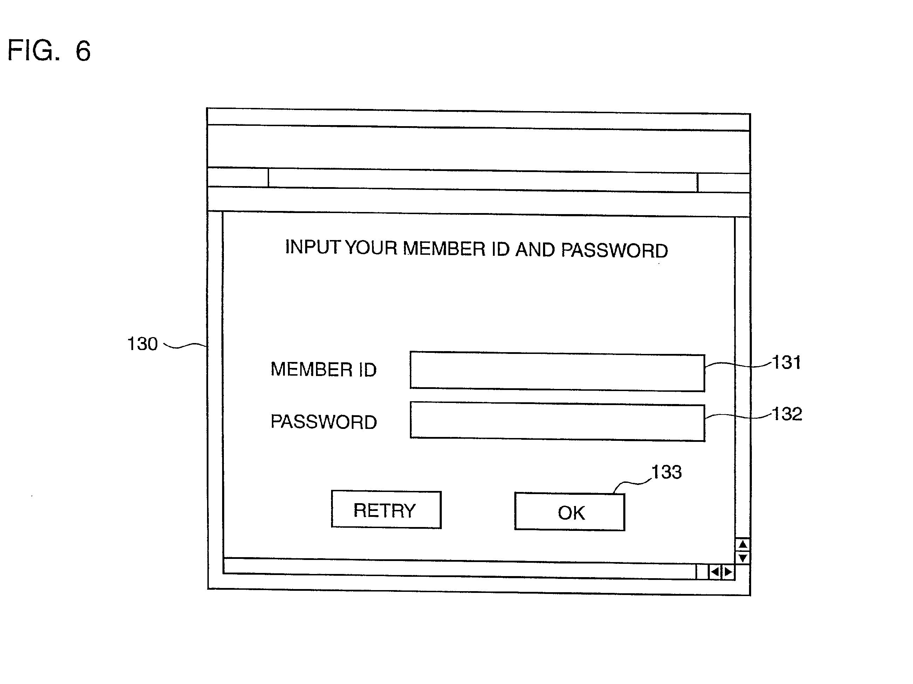

Fig. 6 is a diagram depicting an example of the member ID and password input screen. For example, when the member ID and password input screen 130 shown in Fig. 6 are displayed, the member inputs the member ID and password in each input box 131 and 132 of the member ID and password input screen using the keyboard of the input section 25, and selects the "OK" button 133 using the mouse, the pennant select screen is displayed on the display section 27 for the member to select a normal pennant or friend pennant.

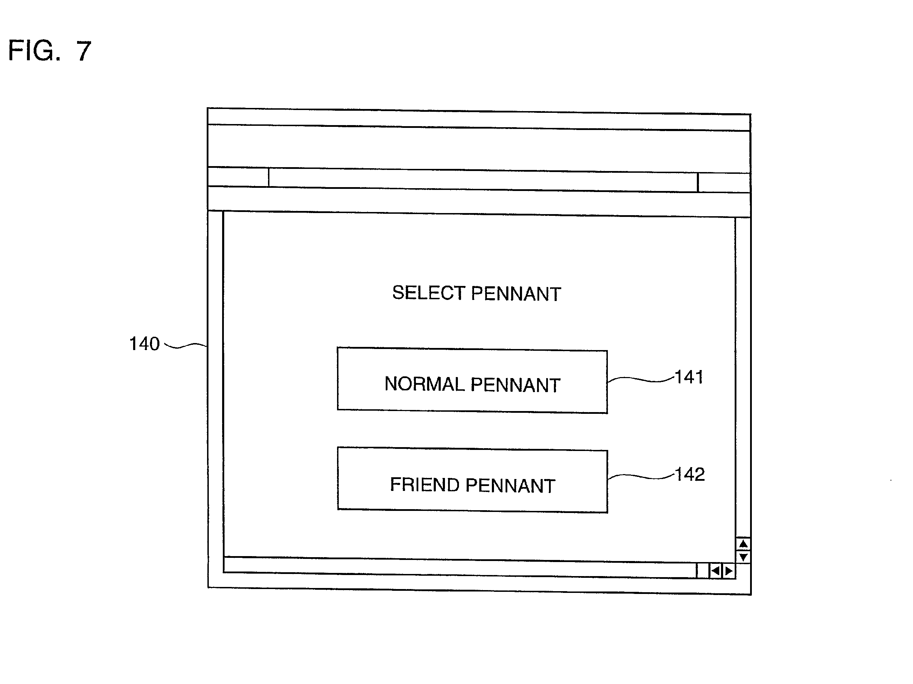

Fig. 7 is a diagram depicting an example of the pennant select screen. For example, when the pennant select screen 140 shown in Fig. 7 is displayed and the member selects the "Normal Pennant" button 141 using the mouse, the normal pennant registration processing, which is described below, starts.

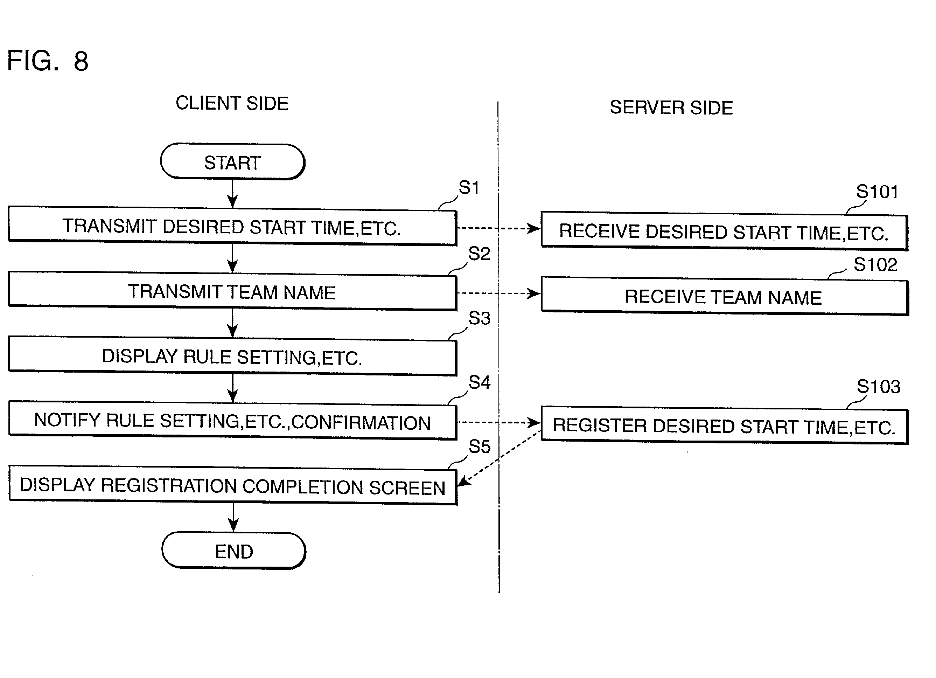

Fig. 8 is a flow chart depicting an example of the normal pennant registration processing by the server system 1 and client computer 2 shown in Fig. 1. The normal pennant registration processing at the client computer 2 side is implemented by the CPU 22, executing the game progression program and browser program, and the normal pennant registration processing at the server system 1 side is implemented by the lobby server 13, executing the normal pennant registration program.

As Fig. 8 shows, in Step S1, the CPU 22 displays the desired start time and schedule notification destination mail address input screen of the normal pennant on the display section 27, receives the desired start time and schedule notification mail address of the normal pennant which the member input using the mouse and keyboard of the input section 25, and sends the desired start time of the normal pennant and the schedule notification destination mail address to the lobby server 13 using the communication section 26.

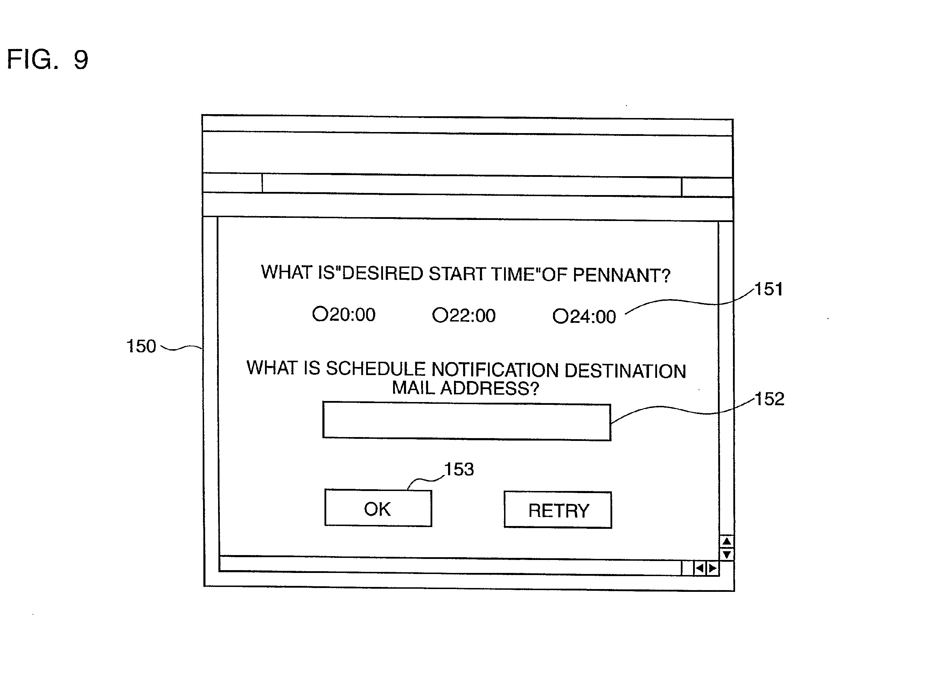

Fig. 9 is a diagram depicting an example of the desired start time and schedule notification destination mail address input screen of the normal pennant. For example, when the input screen 150 shown in Fig. 9 is displayed, and the member selects the desired time button of the desired start time select buttons (e.g. 20:00, 22:00, 24:00) of the normal pennant using the mouse, inputs the electronic mail address of the member himself/herself in the input box 152 of the schedule notification destination mail address using the keyboard, and selects the "OK" button 153 using the mouse, the desired start time of the normal pennant and schedule notification destination mail address which were input are sent to the lobby server 13.

At this time, in Step S101, the lobby server 13 receives the desired start time of the normal pennant and schedule notification destination mail address which were sent, and stores the information in the RAM (not illustrated) in the lobby server 13.

Then in Step S2, the CPU 22 displays the team select screen on the display section 27, receives the team name selected by the member, and sends the team name to the lobby server 13 using the communication section 26.

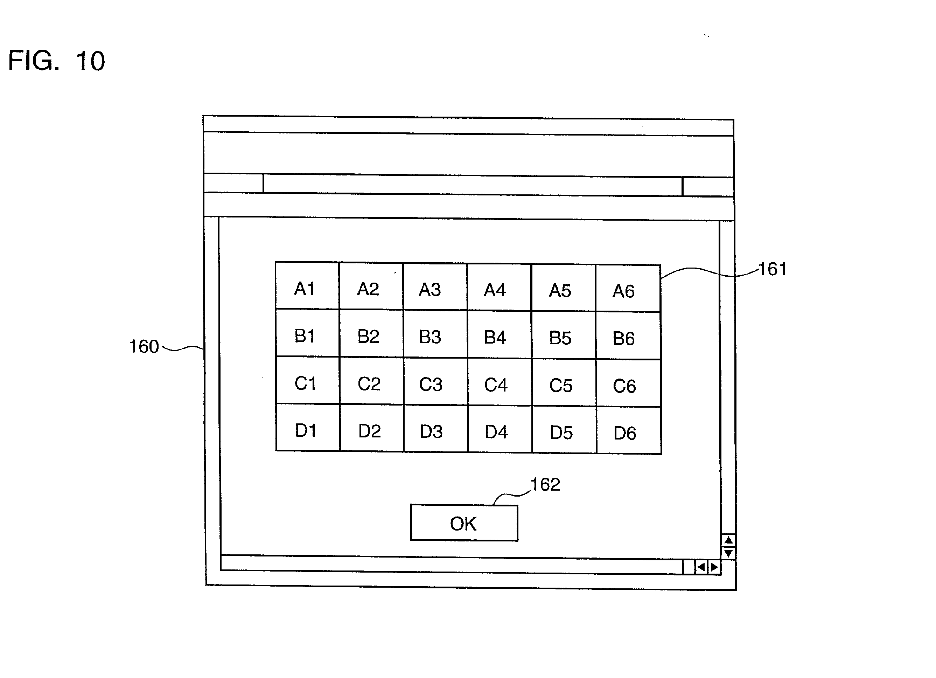

Fig. 10 is a diagram depicting an example of the team select screen. For example, when the team select screen shown in Fig. 10 is displayed, and the member selects a team name to be used from the 12 baseball teams (A1 - A6 and B1 - B6 in Fig. 10 show baseball team names) of the A League and the B League out of the baseball team select box 161 using the mouse, and then selects the "OK" button 162, the selected team name is sent to the lobby server 13.

The team which can be used for the pennant is not limited to the above example, but another team which exists or which is newly created may be registered to the baseball team select box 161 C1 - C6 and D1 - D6, so that the team can be selected.

At this time, in Step S102, the lobby server 13 receives the transmitted team name and stores it in RAM.

Now in Step S3, the CPU 22 sequentially displays each confirmation screen, such as rule setting and game setting, to be used for the normal pennant on the display section 27, and has the member confirm the displayed rule setting and game setting. Here, rule setting is, for example, the number of innings in a game, whether extra innings are played in a game, whether a game can be called, and whether the DH system is used, and game setting is, for example, the wind status, weather status, game time zone, error occurrence status, player condition display status, and player injuries.

After the member confirms rule setting etc., the CPU 22 notifies the lobby server 13 that rule setting etc., was confirmed in Step S4.

At this time, in Step S103, the lobby server 13 registers the stored desired start time of the normal pennant, schedule notification destination mail address, and team name in the game DB server 16 in association with the member ID and password of the member as the normal pennant registration information, and stores the current time as the registration time. Then, the lobby server 13 notifies the client computer 2 that the registration of the member to the normal pennant has completed.

Then in Step S5, the CPU 22 displays a predetermined registration completion screen to indicate the acceptance of the registration of the member to the normal pennant on the display section 27, and the normal pennant registration processing ends.

In the above mentioned normal pennant, the league consists of six members. Games are regularly played in the normal pennant, and, for example, a game starts at 20:00, 22:00 or 24:00 on a Monday, Wednesday, Friday and Saturday during about one month. The registration period of the normal pennant is limited to a predetermined period, such as 0:00 on the 15^{th} of a month to 24:00 on the 5^{th} of the next month. The game time of the normal pennant is limited to a predetermined time, and is set, for example, such that a new inning is not played if 90 minutes have elapsed.

As a rule, the outcome of the game of the normal pennant is determined by the outcome of the baseball game, but when a line is shut down and the connection of the server system 1 and the client computer 2 is disconnected, the lobby server 13 decides the outcome regarding the member who disconnected the line first as the loser. The game result of the pennant decided in this way is announced at a predetermined time, and, for example, the result as of the 26^{th} of each month is automatically updated on the next day, the 27^{th}, by the WWW server 15, and is posted to be read. The above is the same for a friend pennant, except in this case one league may consist of three league members.

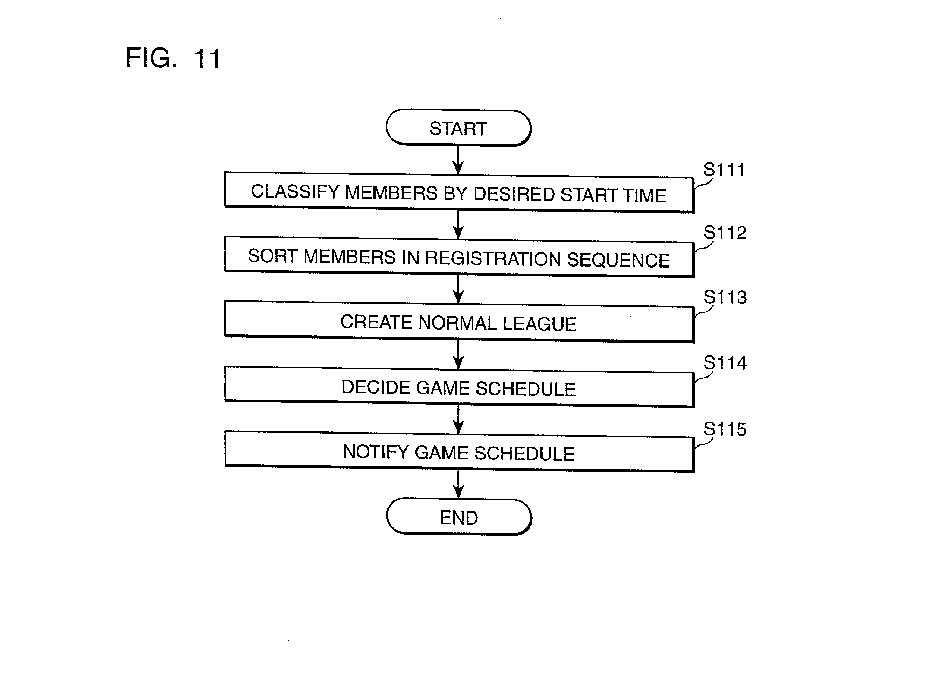

After the registration period of the above mentioned normal pennant ends, the server system 1 performs normal pennant creation processing. Fig. 11 is a flow chart depicting an example of the normal pennant creation processing by the server system 1 shown in Fig. 1. The normal pennant creation processing shown in Fig. 11 is implemented primarily by the lobby server 13, executing the normal pennant creation program.

As Fig. 11 shows, in Step S111, the lobby server 13 extracts the desired start time of the normal pennant out of the normal pennant registration information of each member stored in the game DB server 16, and classifies each member by the desired start time. For example, members are classified into each time of 20:00, 22:00 and 24:00.

Then in Step S112, the lobby server 13 extracts the registration time of each member out of the normal pennant registration information of each member stored in the game DB server 16, and sorts each member in the registration sequence. In the present embodiment, it is allowed that a plurality of teams with the same name exist in one league, so the members are not classified by team name, but one league may consist of teams with different team names, so the members may be classified by team name.

Then in Step S113, the lobby server 13 extracts six members in the registration sequence for each desired start time and sequentially creates a normal league, and instructs the game DB server 16 to store information on the created normal league. The game DB server 16 stores and manages the information on the created normal league.

Then in Step S114, the lobby server 13 decides the game schedule of each normal pennant so as to become the game schedule according to the desired start time, and instructs the game DB server 16 to store the decided game schedule. The game DB server 16 stores and manages the decided game schedule.

Finally in Step S115, the lobby server 13 reads the schedule notification destination mail address stored in the game DB server 16, and instructs the mail server 12 to notify the game schedule to each member to be a member of the normal league by electronic mail using the read schedule notification destination mail address via the member DB server 11. And the mail server 12 sends the schedule of the normal pennant to each member by electronic mail using the schedule notification destination mail address.

In this way, according to the above embodiment, the league members of each normal league are decided out of a plurality of members registered in the normal pennant using the client computer 2, a normal league which consists of decided league members is sequentially created, and the game schedule of the created normal league is decided.

In this way, the normal league is sequentially created for a plurality of members who registered for the normal pennant using the client computer 2, so many members can participate in one of the normal leagues. Since the schedule of the normal pennant is determined so that each league member can play games continuously, each league member can play games continuously according to the schedule of the normal pennant, and complicated strategies with variation can be used for a plurality of games played continuously. Also, the opponents are not unspecified general opponents who differ for each game, but can be limited to the league members belonging to a same normal league, so a plurality of games can be played with opponents specified as members of the normal league.

As a result, heightened excitement can be provided to each member without diminishing the advantages of a net game where many members can participate, and a sufficient sense of achievement can be provided to the winner of the normal pennant.

Since the schedule of the normal pennant is sent to each member by electronic mail, each member can know the schedule of the normal pennant in advance by reading the transmitted electronic mail by accessing the mail server, such as a provider server, using the client computer 2, and the possibility that each member of the normal pennant will participate in each game of the normal pennant according to the game schedule can be increased.

Since the game schedule is decided based on the desired start time requested by a member, a game can be played in a convenient time zone of the member, and the participation rate in baseball games as net games can be improved, and baseball games as net games can progress more smoothly.

The normal pennant creation processing is not limited to the above mentioned example, but can be changed in various ways, for example, only normal pennant registration may be accepted without accepting a desired start time from each member, so that the lobby server 13 freely creates a normal league with each registered member, and freely decide the game schedule of the created league.

Now the friend pennant will be described in detail. When the pennant select screen 140 shown in Fig. 7 is displayed, and the member selects the "Friend Pennant" button 142 using the mouse, the friend pennant menu screen for the member to select a desired menu from a plurality of menus is displayed in the display section 27.

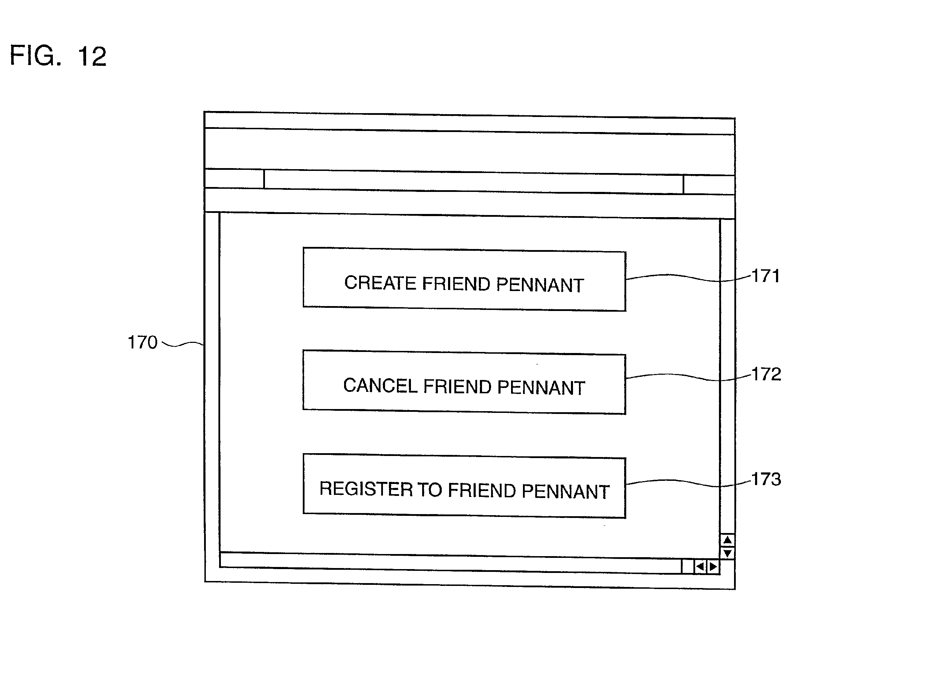

Fig. 12 is a diagram depicting an example of the friend pennant menu screen. For example, when the friend pennant menu screen 170 shown in Fig. 12 is displayed, and the member selects the "Create Friend Pennant" button 171 shown in Fig. 12 using the mouse, the following friend pennant creation processing starts.

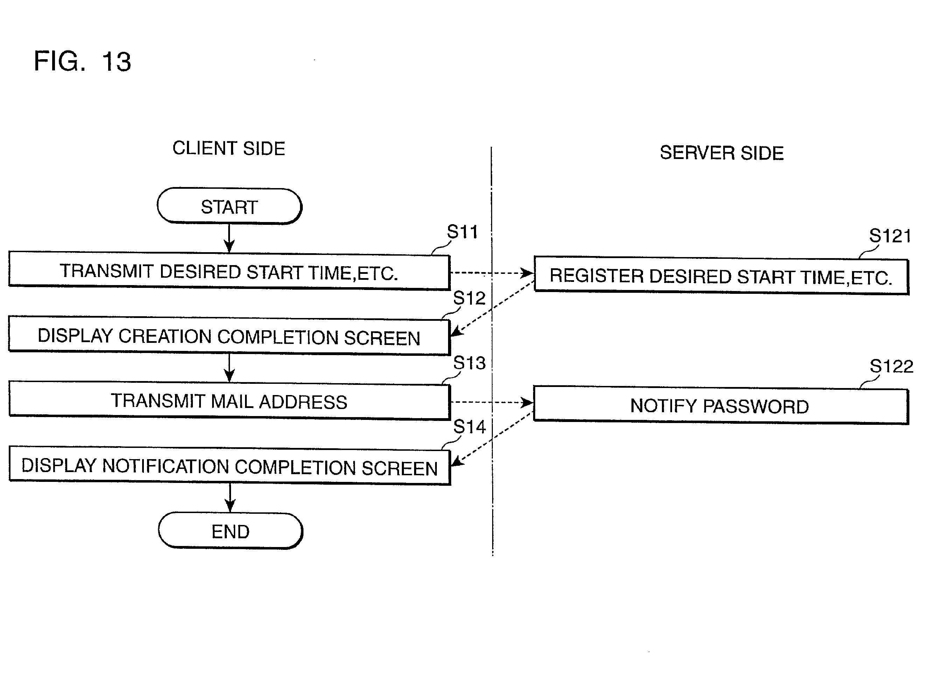

Fig. 13 is a flow chart depicting the friend pennant creation processing by the server system 1, and the client computer 2 shown in Fig. 1. The friend pennant creation processing at the client computer 2 side is implemented by the CPU 22, executing the game progression program and the browser program, and the friend pennant creation processing at the server system 1 side is implemented by the lobby server 13, executing the friend pennant creation program.

As Fig. 13 shows, in Step S11, the CPU 22 displays the input screen for the desired start time of the friend pennant, predetermined number of members, member ID, schedule notification destination mail address, password, and password for cancellation on the display section 27, and accepts the desired start time of the friend pennant which the member input using the mouse and keyboard of the input section 25, and sends the desired start time of the friend pennant to the lobby server 13 using the communication section 26.

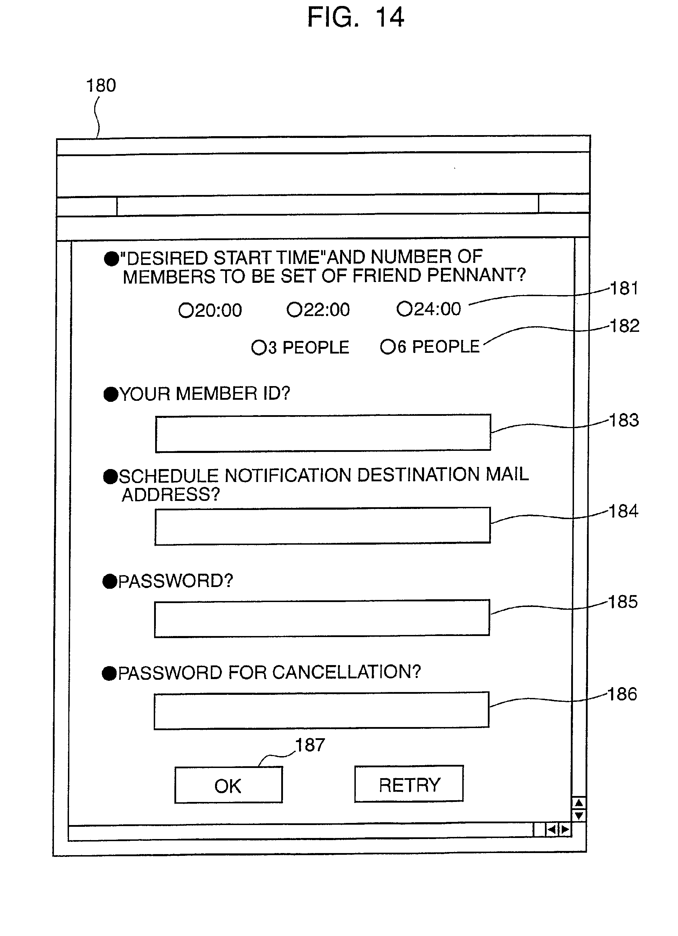

Fig. 14 is a diagram depicting an example of the input screen for the desired start time of the friend pennant, number of members, member ID, schedule notification destination mail address, password, and password for cancellation. For example, the input screen 180 shown in Fig. 14 is displayed, the member selects a button of the desired time from the select buttons of the desired start time (e.g. 20:00, 22:00, or 24:00) of the friend pennant using the mouse, selects a desired number of members (e.g. 3 or 6) of the friend pennant using the mouse, inputs the member ID of the member, electronic mail address, password, and password for cancellation respectively to the member ID input box 183, schedule notification destination mail address input box 184, password input box 185, and password for cancellation input box 186 respectively, and selects the "OK" button 187 using the mouse, then the desired start time, predetermined number of members, member ID, electronic mail address, password, and password for cancellation which were input are sent to the lobby server 13.

Here in this embodiment, an arbitrary character string consisting of four alphabetic characters, for example, is used for the password and password for cancellation. The password and password for cancellation are not limited to the above example, but other character strings, including numeric characters and symbols, may be used, and the number of characters is also not limited to four, but may be another number of characters.

Then in Step S121, the lobby server 13 receives the transmitted desired start time, number of members, member ID, electronic mail address, password and password for cancellation, and registers the desired start time, number of members, electronic mail address, password and password for cancellation, to the game DB server 16 in association with the member ID and password of the member as the friend pennant registration information, to create the friend pennant. Then the lobby server 13 notifies the completion of the creation of the friend pennant to the client computer 2.

Then in Step S12, the CPU 22 displays a predetermined creation completion screen to indicate the creation completion of the friend pennant on the display section 27.

Then in Step S13, the CPU 22 displays the input screen for the self mail address and the mail address of the member to whom the password is notified on the display section 27, receives each mail address which a member input using the keyboard, and transmits each mail address to the lobby server 13 using the communication section 26.

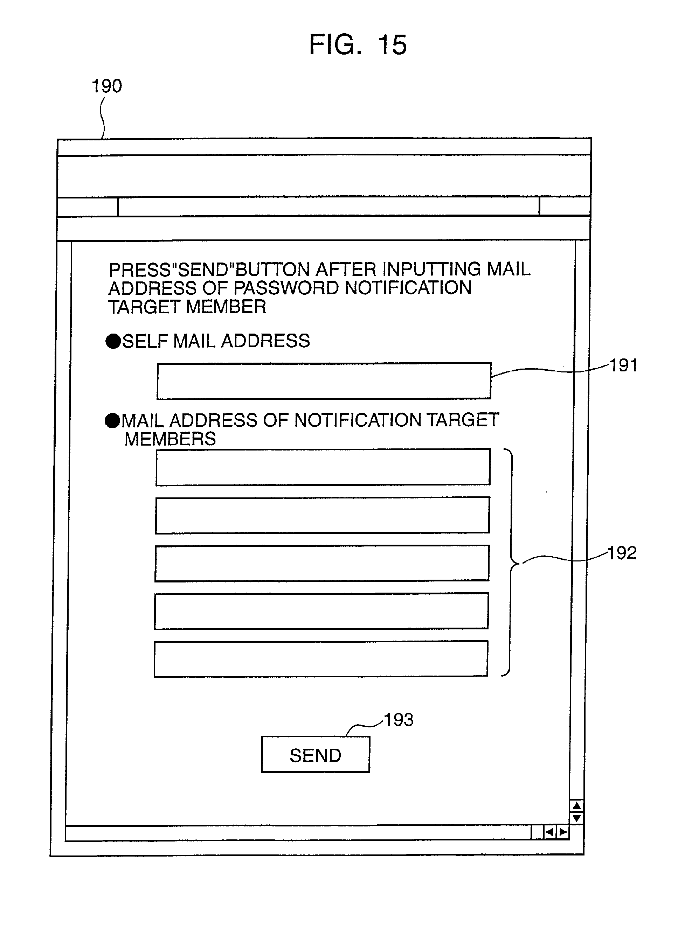

Fig. 15 is a diagram depicting an example of the input screen of the mail address of a member to whom the self mail address and the password are notified. For example, when the input screen 190 shown in Fig. 15 is displayed, the member inputs the self mail address and the mail address of the notification target member in the input box 191 of the self mail address and the input box 192 of the mail address of the notification target member respectively using the keyboard, and selects the "Send" button 193 using the mouse 193, then the self mail address and the mail address of the notification target member, which were input, are sent to the lobby server 13.

In Fig. 15, the input box 192 for inputting the mail address of the predetermined number of members of the friend pennant, which is 5, is displayed, but if 3 is selected for the predetermined number of members, the input box for inputting the mail address for 2 members may be displayed.

Then in Step S122, the lobby server 13 receives the mail address of the self mail address and the notification target mail address which were sent, and instructs the mail server 12 to send electronic mail where the registered password is written to the mail address of the notification target member via the member DB server 11. The mail server 12 sends a password to each member whom the sponsor member desires to be a league member of the member limited league by electronic mail using the mail address of the notification target members. Then the lobby server 13 notifies the client computer 2 that the password of the friend pennant was notified.

Then in Step S14, the CPU 22 displays the notification completion screen to indicate that the password of the friend pennant has notified on the display section 27, and friend pennant creation processing ends.

When one of the members desires to be a sponsor and form a friend pennant using the above mentioned processing, the password registered by this member can automatically be sent to the acquaintances who this member desires to be a league member of the member limited league, so it is unnecessary to notify the password separately to the acquaintances, and the friend pennant can be created conveniently and easily.

Now the friend pennant registration processing by the server system 1 and client computer 2 shown in Fig. 1 will be described. With reference to Fig. 12 again, the sponsor of the above mentioned friend pennant or the member who notified the password, that is, the member who knows the password, selects the "Register to Friend Pennant" button 173, then the friend pennant registration processing starts.

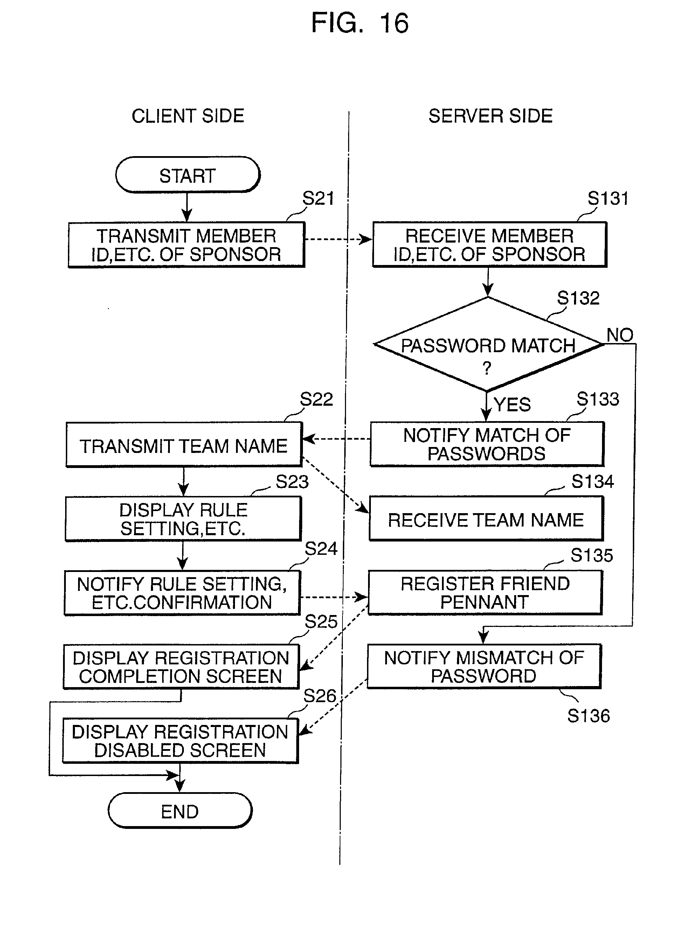

Fig. 16 is a flow chart depicting an example of the friend pennant registration processing by the server system 1 and client computer 2 shown in Fig. 1. The friend pennant registration processing at the client computer 2 side is implemented by the CPU 22, executing the game progression program and browser program, and the friend pennant registration processing at the server system 1 side is implemented by the lobby server 13, executing the friend pennant registration program.

As Fig. 16 shows, in Step S21, the CPU 22 displays the input screen for the member ID of the sponsor, password, schedule notification destination mail address, on the display section 27, accepts the member ID of the sponsor, password, and schedule notification destination mail address which are input by a member, and sends the member ID of the sponsor, password, and schedule notification destination mail address to the lobby server 13 using the communication section 26.

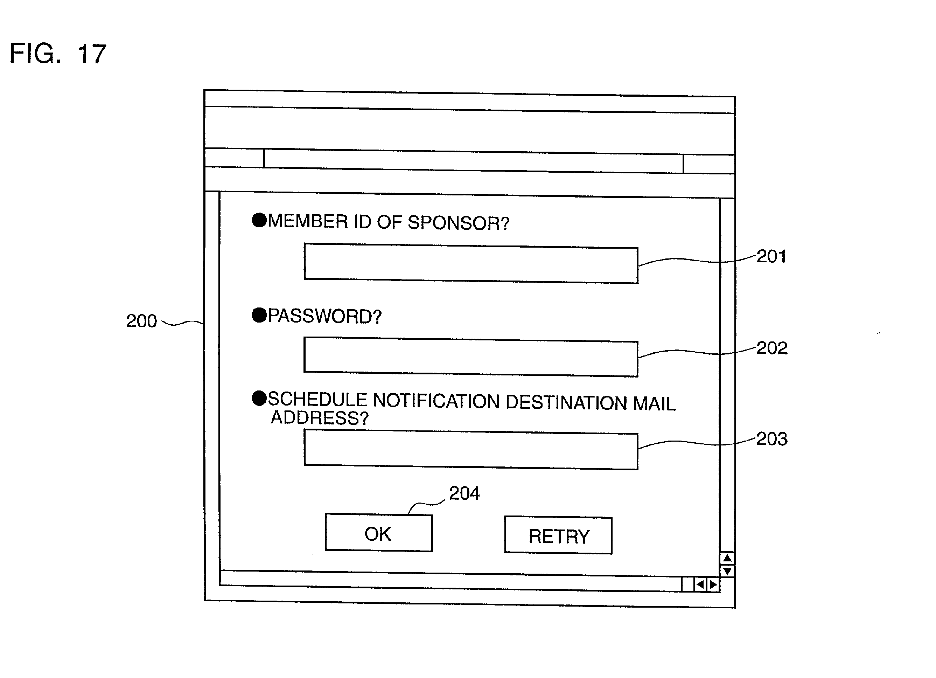

Fig. 17 is a diagram depicting an example of the input screen for the member ID of the sponsor, password and schedule notification destination mail address. For example, the input screen 200 shown in Fig. 17 is displayed, a member inputs the member ID of the sponsor, password, and schedule notification destination mail address in the member ID of the sponsor input box 201, password input box 202, and schedule notification destination mail address input box 203 respectively, and selects the "OK" button 204 using the mouse, then the member ID of the sponsor, password, and schedule notification destination mail address, which were input, are sent to the lobby server 13.

At this time, in Step S131, the lobby server 13 receives the transmitted member ID of the sponsor, password, and schedule notification destination mail address, and stores this information in the RAM.

Then in Step S132, the lobby server 13 reads the password which was registered when the sponsor created the friend pennant using the transmitted member ID of the sponsor from the game DB server 16, and judges whether the read password matches the transmitted password. If the passwords match, the lobby server 13 notifies the client computer 2 that the passwords matched in Step S133.

In this way, according to the present embodiment, a password is specified by the member ID when the matching of passwords is judged, and a plurality of friend pennants where passwords are the same can be created. If the member ID is not used as above, same passwords are not allowed, so a message to notify that the same password exists may be displayed in Step S12 in Fig. 13, so as to prompt the member to change the password to another character string.

When the notification on the matching of passwords is received, the CPU 22 displays the team select screen on the display section 27, accepts the team name selected by the member, and sends the team name to the lobby server 13 using the communication section 26 in Step S22, just like in Step S2 in Fig. 8.

At this time, in Step S134, the lobby server 13 receives the transmitted team name, and stores it in the RAM, just like in Step S102 in Fig. 8.

Then in Step S23, the CPU 22 displays the rule setting and game setting to be used in the friend pennant on the display section 27, just like in Step S3 shown in Fig. 8, and accepts the confirmation by the member about the displayed rule setting and game setting.

After the member confirms the rule setting etc., the CPU 22 notifies the lobby server 13 that the rule setting etc. is confirmed in Step S24, just like in Step S4 in Fig. 8.

At this time, in Step S135, the lobby server 13 registers the stored schedule notification destination mail address and team name in the game DB server 16 in association with the member ID and the password of the member as the friend pennant registration information, just like in Step S103 shown in Fig. 8. Then the lobby server 13 notifies the client computer 2 that the registration of the member to the friend pennant has completed.

Then in Step S25, the CPU 22 displays a predetermined registration completion screen to indicate the acceptance of the member to the friend pennant on the display section 27, and the friend pennant registration processing ends.

If passwords do not match (NO in Step S132), the lobby server 13 notifies the client computer 2 that passwords do not match in Step S136.

When the notification that the passwords do not match is received, the CPU 22 displays the registration disabled screen, which indicates that passwords do not match and that registration to the friend pennant cannot be accepted, on the display section 27 in Step S26, and the friend pennant registration processing ends.

In this way, according to the present embodiment, a friend pennant, where league baseball games are played by the member limited league, is created, wherein the password which a member registered using the client computer 2 is stored in the game DB server 16, and only the user who sends the same password as the password stored in the game DB server 16 to the lobby server 13 using the client computer 2 becomes a league member.

To create the friend pennant, each member of the member limited league must know the password in advance, and the league members are limited to acquaintances who know each other before forming the member limited league. Therefore acquaintances can create a member limited league using a predetermined password, so acquaintances who desire to play a league baseball game can play in the friend pennant, which further improves the excitement of baseball games played as net games.

Also the net game has a characteristic in that each member can participate voluntarily, so an opponent may not access on the date and time when a league baseball game is played, and the league baseball game cannot be played, but in the case of the above mentioned friend pennant, the members know each other, so the incentive to participate in the friend pennant can be increased, and league baseball games played as a net game can proceed smoothly.

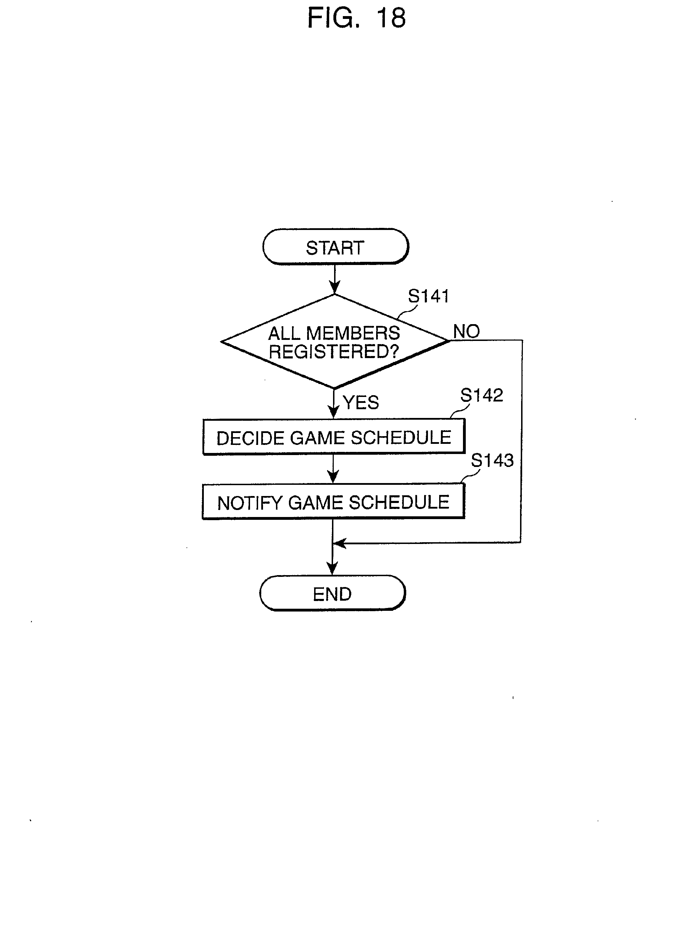

When the friend pennant registration period ends, the server system 1 executes friend pennant schedule notification processing. Fig. 18 is a flow chart depicting an example of the friend pennant schedule notification processing by the server system 1 shown in Fig. 1. The friend pennant schedule notification processing shown in Fig. 18 is primarily implemented by the lobby server 13, executing the friend pennant schedule notification program.

As Fig. 18 shows, in Step S141, the lobby server 13 judges whether all the league members have registered to the friend pennant by the above mentioned friend pennant registration processing, and if all the league members have registered to the friend pennant, processing moves to Step S142, but if at least one league member has not registered to the friend pennant, processing ends since this friend pennant cannot be held.

If all the league members have registered to the friend pennant, the lobby server 13 decides the game schedule of each friend pennant, so as to become the game schedule according to the desired start time in Step S142.

Finally in Step S143, the lobby server 13 reads the schedule notification destination mail address stored in the game DB server 16, and instructs the mail server 12 via the member DB server 11 to notify the game schedule to each member to be a league member of the member limited league by electronic mail using the read schedule notification destination mail address. The mail server 12 sends the schedule of the friend pennant to each member by electronic mail using the schedule notification destination mail address.

By the above processing, the schedule of the friend pennant is transmitted to each member registered to the friend pennant by electronic mail, so each member can know the schedule of the friend pennant in advance by accessing the mail server, such as a provider server, using the client computer 2, and reading the transmitted electronic mail, which increases the probability that each member will participate in each game of the friend pennant according to the game schedule.

Now the friend pennant cancellation processing by the server system 1 and the client computer 2 shown in Fig. 1 will be described. With reference to Fig. 12 again, the sponsor of the above mentioned friend pennant selects the "Cancel Friend Pennant" button 172 using the mouse, then the friend pennant cancellation processing starts.

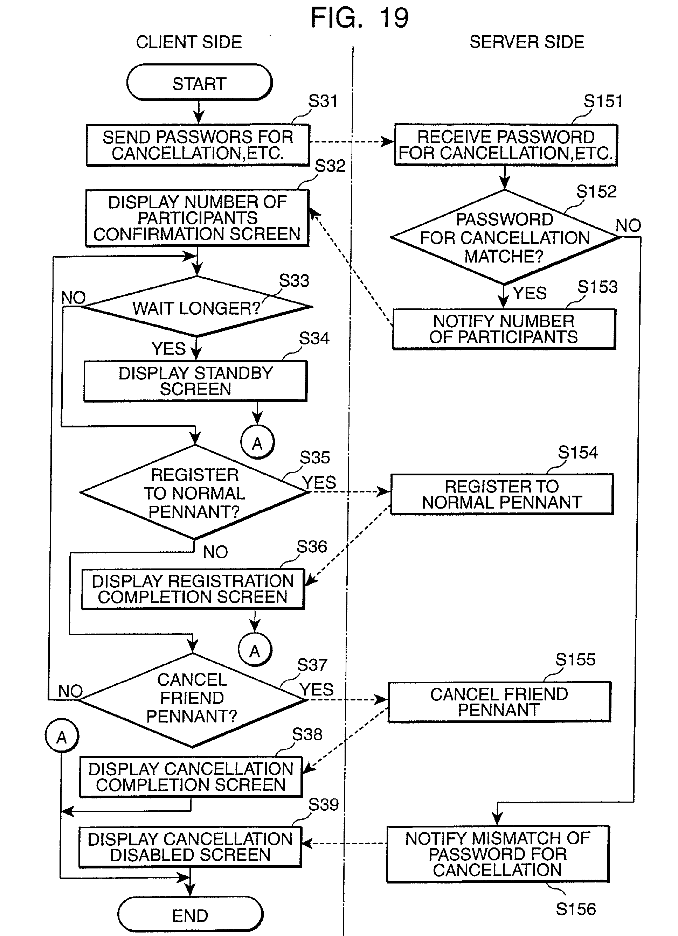

Fig. 19 is a flow chart depicting an example of the friend pennant cancellation processing by the server system 1 and client computer 2 shown in Fig. 1. The friend pennant cancellation processing at the client computer 2 side shown in Fig. 19 is implemented by the CPU 22, executing the game progression program and browser program, and the friend pennant cancellation processing at the server system 1 side is implemented by the lobby server 13, executing the friend pennant cancellation program.

As Fig. 19 shows, in Step S31, the CPU 22 displays the input screen for the password and password for cancellation on the display section 27, accepts the password and password for cancellation which a member inputs, and sends the password and password for cancellation to the lobby server 13 using the communication section 26.

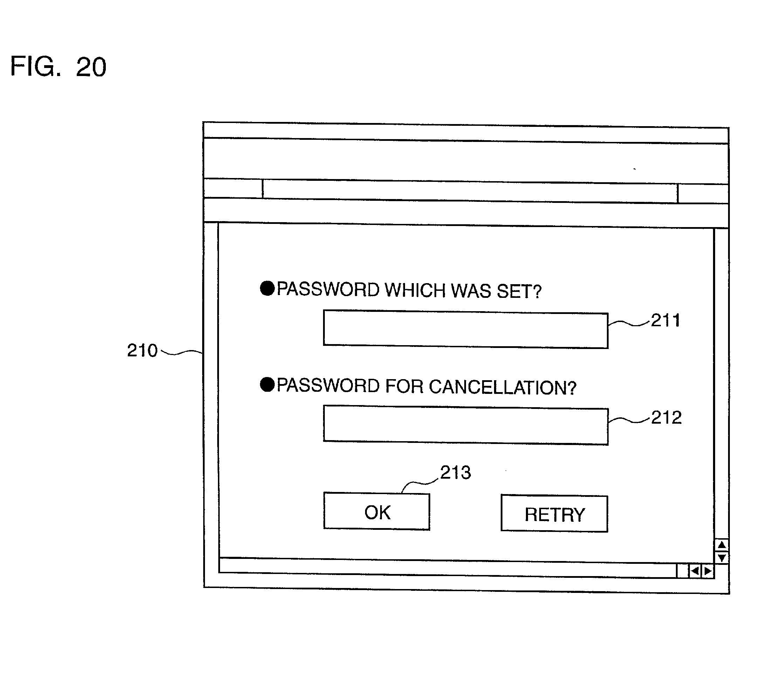

Fig. 20 is a diagram depicting an example of the input screen for the password and password for cancellation. For example, when the input screen 210 shown in Fig. 20 is displayed, and the member who is the sponsor of the friend pennant inputs the password and password for cancellation in the password input box 211 and password for cancellation input box 212 respectively using the keyboard of the input section 25, and selects the "OK" button 213 using the mouse, the password and password for cancellation which were input are sent to the lobby server 13.

At this time, in Step S151, the lobby server 13 receives the transmitted password and password for cancellation, and stores them in the RAM.

Then in Step S152, the lobby server 13 reads the password for cancellation, which was set when the friend pennant was created, from the game DB server 16, and judges whether the read password for cancellation and the transmitted password for cancellation match. If the passwords for cancellation match, the lobby server 13 notifies the client computer 2 the number of participants who already registered to the friend pennant for which the matched passwords for cancellation is set in Step S153.

And when the number of participants are notified, the CPU 22 displays the number of participants confirmation screen on the display section 27 using the number of the participants of the friend pennant sent from the lobby server 13 in Step S32.

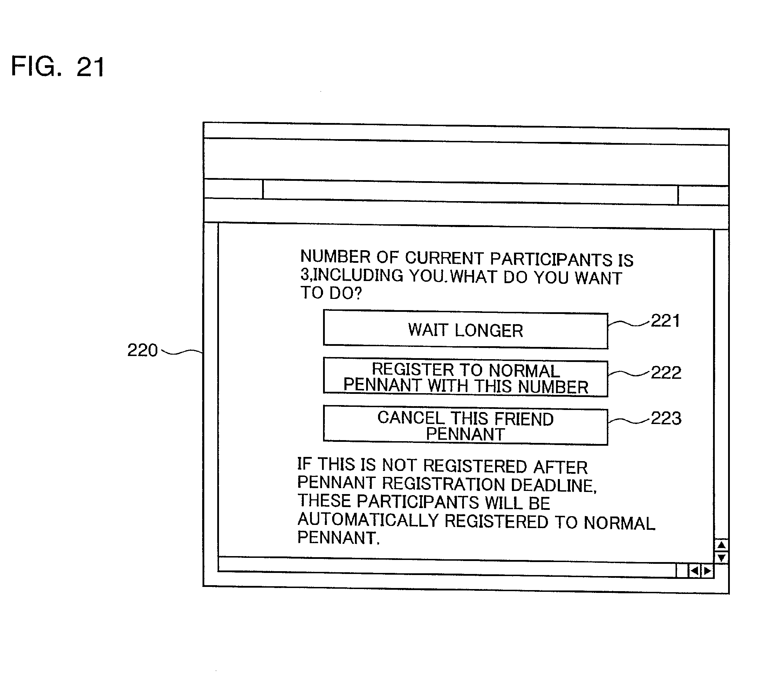

Fig. 21 is a diagram depicting an example of the number of participants confirmation screen. For example, when the friend pennant consists of 6 members and only 3 members have registered at that time, the number of participants confirmation screen 220 shown in Fig. 21 is displayed. At this time, the member can check the current number of participants, and can select one of "Wait Longer" button 221, "Register to Normal Pennant With This Number" button 222, and "Cancel This Friend Pennant" button 223.

Then in Step S33, the CPU 22 judges whether the member selected the "Wait Longer" button 221 using the mouse. If the "Wait Longer" button 221 is selected, the CPU 22 displays a standby screen displaying "Wait Longer" on the display section 27 in Step S34, and ends processing. If the "Wait Longer" button 221 is not selected, processing moves to Step S35.

If the "Wait Longer" button 221 is not selected, the CPU 22 judges whether the member selected "Register to Normal Pennant With This Number" button 222 using the mouse in Step S35. If the "Register to Normal Pennant With This Number" button 222 is selected, the CPU 22 notifies the lobby server 13 to register all the members currently registered to the normal pennant using the communication section 26, and if the "Register to Normal Pennant With This Number" button 222 is not selected, processing moves to Step S37.

When a notification to register all the members, who are currently registered to the friend pennant, to the normal pennant is received, the lobby server 13 instructs the game DB server 16 to register all the members, who are currently registered to the friend pennant for which passwords for cancellation match, to the normal pennant in Step S154. The game DB server 16 registers all the members registered to the specified friend pennant to the normal pennant, and cancels the friend pennant. Then the lobby server 13 notifies the client computer 2 that registration to the normal pennant is completed.

Then in Step S36, the CPU 22 displays a predetermined registration completion screen to indicate the acceptance of registration to the normal pennant on the display section 27, and ends processing.

When the member who sent the password for cancellation selects to participate in the normal pennant by the above mentioned processing, the created friend pennant is cancelled, and all the members registered to the friend pennant are registered to the normal pennant, and finally a normal pennant, to which each member can participate, is created.

In this way, when the members attempt to form a friend pennant but cannot due to such a reason as some acquaintances not registering to the friend pennant, the members can automatically participate in the normal pennant, so the choice of pennants to participate in can be expanded, and members can easily participate in the normal pennant. In the above description, all the members registered to the friend pennant are registered to the normal pennant, but only the member who sent the password for cancellation may be registered to the normal pennant.

When the "Register to Normal Pennant With This Number" button 222 is not selected (NO in Step S35), the CPU 22 judges whether the member selected the "Cancel This Friend Pennant" button 223 using the mouse in Step S37. If the "Cancel This Friend Pennant" button 223 is selected, the CPU 22 notifies the lobby server 13 to cancel the friend pennant using the communication section 26, and if the "Cancel This Friend Pennant" button 223 is not selected, processing moves to Step S33, and subsequent processings are continued.

When the notice to cancel the friend pennant is received, the lobby server 13 instructs the game DB server 16 to cancel the friend pennant for which password for cancellation matched in Step S155. The game DB server 16 cancels the instructed friend pennant. Then the lobby server 13 notifies the client computer 2 that cancellation of the friend pennant ended.

Then in Step S38, the CPU 22 displays a predetermined cancellation completion screen to indicate the cancellation of the friend pennant on the display section 27, and processing ends.

If the passwords for cancellation do not match (NO in Step S152), the lobby server 13 notifies the client computer 2 that the passwords for cancellation do not match in Step S156.

Then in Step S39, the CPU 22 displays a predetermined cancellation disabled screen to indicate that passwords for cancellation do not match, and cancellation of the friend pennant cannot be accepted on the display section 27, and the processing ends.

As described above, when a member sends the password for cancellation which is the same as the password for cancellation stored in the game DB server 16 using the client computer 2, the friend pennant created by this member is cancelled.

In this way, to cancel the friend pennant, the password for cancellation must be known in advance, and the cancellation right must be assigned to only a member who knows the password for cancellation, so the security of the friend pennant can be assured. Also a friend pennant created once can be cancelled according to the request of the member, so the choice of the member when participating in baseball games played as net games can be expanded, and the advantage of a net game where members can participate voluntarily is not diminished.

As described above, games are played according to the schedule of each league after the normal pennant or friend pennant is created, but net games have a characteristic in that members can participate voluntarily, so it is possible that a member does not participate, so handling in such a case is important.

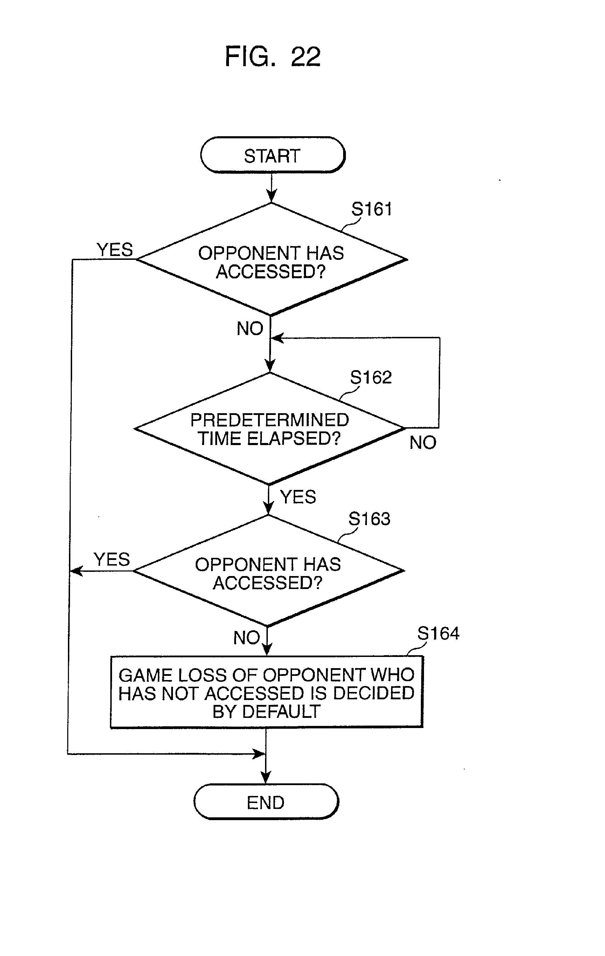

For this, according to the present embodiment, a case when a member does not participate in a game is handled using the outcome decision processing, to be described below. Fig. 22 is a flow chart depicting an example of the outcome decision processing by the server system 1 shown in Fig. 1. The outcome decision processing shown in Fig. 22 is primarily implemented by the lobby server 13, executing the outcome decision program.

As Fig. 22 shows, in Step S161, the lobby server 13 judges whether the member to be the opponent has accessed using the client computer 2 at the game start time of each pennant.

When both opponents have accessed and the game can be started (YES in Step S161), the processing ends and the normal game progression processing for progressing the baseball game is continued. On the other hand, when one of the opponents has not accessed, processing moves to Step S162.

Then in Step S162, the lobby server 13 judges whether a predetermined time has elapsed since the game start time, and if the predetermined time has not elapsed, Step S162 is repeated, and processing moves to Step S163 if a predetermined time has elapsed.

Then in Step S163, the lobby server 13 judges again if the member to be the opponent has accessed using the client computer 2. If both opponents have accessed and the game can be started (YES in Step S163), processing ends, and the normal game progression processing for progressing the baseball game is continued. On the other hand, if one of the opponents has not accessed, processing moves to Step S164. In this case, a predetermined penalty may be assigned to the member who is late for the game start time, according to the delayed time, and for example, the capabilities of the characters (baseball players) whom this member will use for the baseball game may be lessened.

When only one of the opponents has not accessed, the lobby server 13 decides the game loss of the member who has not accessed by default in Step S164, and decides the game win of the member who has accessed by default, and notifies this result to the game DB server 16. The game DB server 16 stores and manages this result as a game result of this pennant. The description on the case when both opponents have not accessed was omitted here, but in this case the game may be played again or may end in a tie.

By the above mentioned processing, when one of the members who is supposed to participate in the game has not accessed to the server system 1 using the client computer 2 after a predetermined time has elapsed since the game start time, the lobby server 13 decides the game loss of the member who has not accessed by default, and decides the game win of the member who has accessed by default.

In this way, the member who participated in the game can win after a predetermined time, an excessive burden is not applied to the member who participated in the game, and the member who does not participate in the game loses for the number of games not participated in, so an appropriate penalty can be assigned to a member who does not participate in the game, and baseball games played as net games can progress more smoothly.

Now the summit pennant will be described in detail. According to the present embodiment, the summit pennant is played for each winner of the above mentioned normal pennant, and a final winner is decided. The summit pennant is played, for example, during 20:00 to 24:00 on the second of each month, where the number of innings of each game is 3, higher ranking is decided by the number of consecutive victories, and the member who has the highest number of consecutive victories becomes the final winner.

The schedule of the summit pennant can be notified to each winner of each normal pennant by posting it on a predetermined home page by the WWW server 15, so as to be read at the client computer 2, or by sending electronic mail to the winners of the normal pennant by the mail server 12.

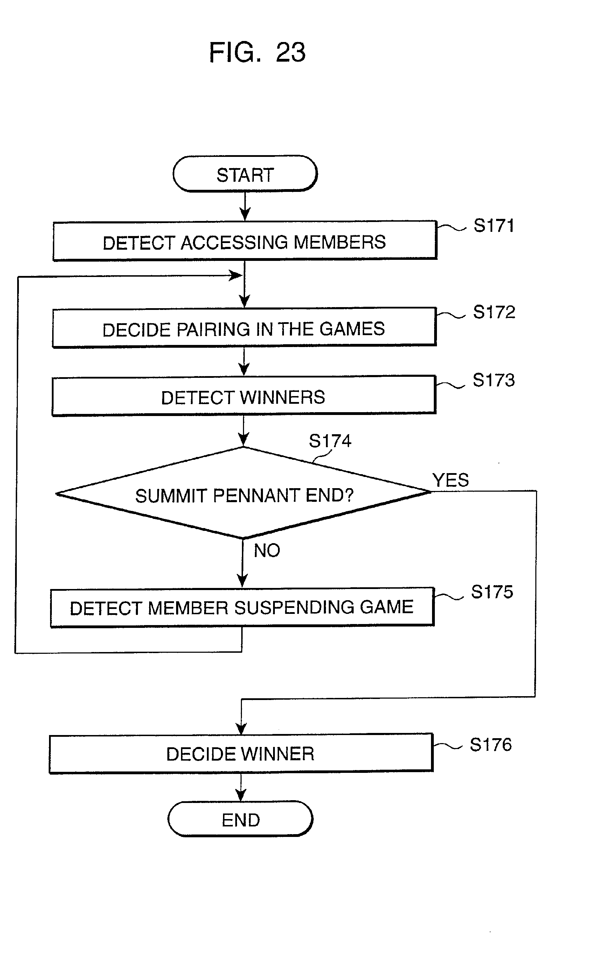

Fig. 23 is a flow chart depicting the summit pennant progression processing by the server system 1 shown in Fig. 1. The summit pennant progression processing shown in Fig. 23 is implemented primarily by the lobby server 13, executing the summit pennant progression program.

As Fig. 23 shows, in Step S171, the lobby server 13 detects the winners of the normal pennant who are accessing the lobby server 13 using the client computer 2 at the opening time of the summit pennant.

Then in Step S172, the lobby server 13 sequentially decides the opponents for the accessing winners, and decides the pairing in the first game. For example, the lobby server 13 decides the pairing in the games according to the sequence of the accessing time, and each winner plays a game according to the decided pairing.

Then in Step S173, the lobby server 13 detects a winner each time a game is over, without waiting for all of the first games to end.

Then in Step S174, the lobby server 13 judges whether the summit pennant ended by judging whether the number of winners who survived becomes one winner and the rest of the winners all lost, or whether the end time of the summit pennant has come, and if the summit pennant ends, processing moves to Step S176, and if the summit pennant has not ended, processing moves to Step S175.

When the summit pennant has not ended, the lobby server 13 detects the members who selected to suspend the next game out of the currently surviving winners in Step S175.

Then in Step S172, the lobby server 13 sequentially decides the opponent to the currently surviving winners to decide the pairing in the next game, excluding the members who selected to suspend the next game. Therefore winners can play the next game immediately. If a new winner of the normal pennant who accessed is detected at this time, this winner may be included to decide the pairing in the games.

Then in Step S173, the lobby server 13 detects a winner each time a game ends. Then in Step S174, the lobby server 13 judges whether the summit pennant ended, just as mentioned above.

By repeating the above processing, games based on the battle royal system are sequentially played, and the summit pennant ends when the number of winners who survived becomes one winner and the rest of the winners all lost, or when the number of winners who survived is not more than one but the end time of the summit pennant has come.

In Step S176, when the number of winners who survived is one, the lobby server 13 decides this winner to be the final winner, and when the number of winners who survived is more than one, the lobby server 13 decides the winner who has won the largest number of games among the winners who survived to be the final winner, and ends processing.

By the above processing, the winners of the normal pennant who are accessing the lobby server 13 using the client computers 2 are detected, the pairing in the games is decided for the detected winners, the games are played according to the decided pairing in the games, and the pairing in the following games is sequentially decided for the winners who survived as the result.

Therefore the winner to be an opponent is always in the state of accessing the lobby server 13, so a game can be played immediately, and the winner of each game can be decided in a short time. Also the pairing in the next game is immediately decided for a winner who survived, so games can be sequentially played, and many games can be played consecutively in a short time. As a result, the winner of the summit pennant can be decided from the many winners of the normal pennant in a short time without wasting the time of the winners of the normal pennant.

The pairing in the games is not decided for the winners who select to suspend a game out of the winners of the normal pennant whose access was detected, so the winners can rest if necessary. As a result, a winner of the summit pennant can be decided from the many winners of the normal pennant without applying an excessive burden on the winners of the normal pennant who will participate in the summit pennant.

As a result of the games played according to the decided pairing in the games, a winner who won the largest number of games is decided as the winner of the summit pennant, so even if a winner who selected to suspend a game survives until the final game, the number of victories of this winner is less than the number of victories of the winner who survived without suspending games. As a result, it can be prevented that the winner who selected to suspend a game becomes the winner of the summit pennant, so the winner of the summit pennant can be decided fairly for all the winners of the normal pennant.

The operation format of the summit pennant is not limited to the above example, and for example, the summit pennant may be divided into preliminaries and finals, where preliminaries are played based on the above mentioned battle royal system at 20:00 - 24:00 on the second of each month, finals are played by the winners of the normal pennant who won three consecutive times in the preliminaries based on the above mentioned battle royal system at 20:00 - 24:00 on the third of each month, and the winner of the normal pennant who consecutively won the most in the finals becomes the winner of the summit pennant.

The summit pennant may be played for the winners of the friend pennant, or a pennant race may be played based on the battle royal system from the beginning without playing the normal pennant.

In the above description, the case when the member who paid a predetermined fee to play a net game was described, but the present invention can be applied in the same way to the case when unspecified users pay a fee using a prepaid card or when a net game can be played free of charge, where the same effect can be received.

According to the present embodiment, a personal computer is used as the terminal device, but other terminal devices, such as a portable telephone and portable information terminal, may be used only if the net game can be played on the terminal device. A personal computer may be used for the net game itself, and the portable telephone may be used for registration to the normal pennant and for the creation of and registration to the friend pennant.

Information to be transmitted/received between the server system 1 and the client computer 2 may be encrypted using a known encryption technology. In this case, the security of each information to be transmitted can be improved.

In summary, the present invention relates to a server device for net games which is communicably connected to a plurality of terminal devices used by users via a network for managing a game played in a game space by the users using the terminal devices, comprising detecting means for detecting users who are accessing using the terminal devices, and pairing deciding means for deciding a pairing in the games for users whose access was detected by the detecting means, and sequentially deciding a pairing in the next games for users who won the games played according to the decided pairing in the games.

According to the present invention as described in the above, the server device for net games which is communicably connected to a plurality of terminal devices used by users via a network for managing a game played in a game space by the users using the terminal devices, comprises detecting means for detecting users who are accessing using the terminal devices, and pairing deciding means for deciding a pairing in the games for users whose access was detected by the detecting means, and sequentially deciding a pairing in the next games for users who won the game played according to the decided pairing in the games.

In other words, users who are accessing using the terminal devices are detected, a pairing in the games is decided for the detected users, and the game is played according to the decided pairing in the games, and for the user who won as a result, the pairing of the following games is sequentially decided. Therefore, a user who will be an opponent is always accessing, so they can play a game immediately, and a winner of each game can be decided in a short time. Also a pairing in the next game is immediately decided for the user who won, so games can be sequentially played and many games can be played consecutively in a short time. According to the present invention as described in the above, a winner of each game can be decided from the many users in a short time, and many games can be played consecutively in a short time, so a winner can be decided from many users in a short time without wasting the time of the user.

The present invention may be provided with the feature that the pairing deciding means does not make the pairing in the games for users who selected to suspend a game out of the users whose access was detected by the detecting means.

According to the present invention with the above feature, the pairing deciding means does not make the pairing in the games for users who selected to suspend a game out of the users whose access was detected by the detecting means.

In other words, the pairing in the games is not made for the users who selected to suspend the game out of the users whose access was detected, so the user can rest if necessary. As a result, a user can rest when necessary, so a winner can be decided from many users without applying an excessive burden on the users.

The present invention may further comprise winner deciding means which, as a result of the games played according to the pairing in the games decided by the pairing deciding means, decides a user who won the largest number of games as a winner.

According to the above feature, the server device for net games further comprises winner deciding means which, as a result of the games played according to the pairing in the games decided by the pairing deciding means, decides a user who won the largest number of games as a winner.

In other words, as a result of the games played according to the decided pairing in the games, a user who won the largest number games is decided as a winner, so even if a user who selected to suspend a game survives until the end of the games, their number of won games is less than the number of won games of the user who consecutively won games without suspending a game, therefore the user who selected to suspend a game cannot be a winner. As a result, even if a user who selected to suspend a game survives to the final game, it can be prevented that this user becomes the winner, so a winner can be decided fairly for all the users.

The present invention may further comprise league creating means for deciding a predetermined number of users from a plurality of users who accessed using the terminal devices as league members, and sequentially creating a league which consists of the decided league members, and schedule deciding means for deciding a schedule of league baseball games so that each league member of the league created by the league creating means plays at least game with all the other league members, wherein the pairing deciding means decides the pairing in the games for the users whose access was detected by the detecting means out of the users who became winners of the league baseball games for which the schedule was decided by the schedule deciding means, and sequentially deciding the pairing in the following games for the users who became winners in the games played according to the decided pairing in the games.

According to the present invention with the above described feature, the server device for net games further comprises league creating means for deciding a predetermined number of users from a plurality of users who accessed using the terminal devices as league members, and sequentially creating a league which consists of the decided league members, and schedule deciding means for deciding a schedule of league baseball games so that each league member of the league created by the league creating means plays at least one game with all the other league members, wherein the pairing deciding means decides the pairing in the games for the users whose access was detected by the detecting means out of the users who became winners of the league baseball games for which the schedule was decided by the schedule deciding means, and sequentially deciding the pairing in the following games for the users who became winners in the games played according to the decided pairing in the games.

In other words, a predetermined number of users out of a plurality of users who accessed using the terminal devices are decided as league members, a league which consists of the decided league members is sequentially created, and the schedule of the league baseball games is decided so that each league member of the created league plays at least one game with all the other league members.

In this way, a league is sequentially created for the plurality of users who accessed using the terminal devices, so many users can participate in one of the leagues. Also the schedule of the league baseball games is decided so that each league member plays at least one game with all the other league members, so each league member can play games continuously according to the schedule of the league baseball games, and complicated strategies with variation can be used for a plurality of games which are played consecutively.

As a result, many users can participate in one of the leagues, so the advantage of net games, where many users can participate, is not excessively diminished, and also complicated strategies with variation can be used for a plurality of consecutively played games, so more excitement can be given to users, and also a plurality of games can be played with an opponent specified as a member of the league, therefore a sufficient sense of accomplishment as a winner can be given to the users when the user wins a league baseball game.

Also the pairing in the games is decided for the users whose access is detected out of the users who won the league baseball games, and the games are played according to the decided pairing in the games, and as a result, the pairing of the following games is sequentially decided for the users who won. Therefore the winner of the league baseball game to be an opponent is always in access status, so a game can be played immediately, and the winner of each game can be decided in a short time. Also for the users who won, the pairing of the next games is decided immediately, so the games to decide the final winner can be sequentially played, and many games can be played consecutively in a short time. According to the above feature, the final winner out of the winners of the league baseball games can be decided in a short time, and many games to decide the final winner can be played consecutively in a short time, so the final winner can be decided out of the many winners of the league baseball games in a short time without wasting the time of the winners of the league baseball games.

The present invention relates also to a net game management method using a server device for net games which is communicably connected to a plurality of terminal devices used by users via a network for managing a game played in a game space by the users using the terminal devices, comprising a detecting step for the server device for net games to detect users who are accessing using the terminal devices, and pairing deciding means for the server device for net games to decide the pairing in the games for the users whose access was detected in the detecting step, and to sequentially decide the pairing in the following games for users who won the games played according to the decided pairing in the games.

According to the present invention in the form described in the above, the net game management method using the server device for net games which is communicably connected to a plurality of terminal devices used by users via a network for managing a game played in a game space by the users using the terminal devices, comprises a detecting step for the server device for net games to detect users who are accessing using the terminal devices, and pairing deciding means for the server device for net games to decide the pairing in the games for the users whose access was detected in the detecting step, and to sequentially decide the pairing in the following games for users who won the games played according to the decided pairing in the games.

In other words, users who are accessing using the terminal devices are detected, the pairing in the games is decided for the detected users, and the games are played according to the decided pairing in the games by the server devices for net games, and the pairing in the following games is sequentially decided for the users who won the game as a result. Therefore the user to be an opponent is always in access status, so a game can be played immediately, and the winner of each game can be decided in a short time. Also for the users who won, the pairing of the next games is decided immediately so the games can be sequentially played, and many games can be played consecutively in a short time. As a result, a winner of each game can be decided from the many users in a short time, and many games can be played consecutively in a short time, so a winner can be decided from many users in a short time without wasting the time of the user.

The present invention relates also to a net game management program for providing functions to a server device for net games which is communicably connected to a plurality of terminal devices used by users via a network for managing a game played in a game space by the users using the terminal devices, as detecting means for detecting users who are accessing using the terminal devices, and as pairing deciding means for deciding the pairing in the games for the users whose access was detected in the detecting step, and sequentially deciding the pairing in the following games for users who won the games played according to the decided pairing in the games.

According to the present invention in the above described form, the net game management program for providing functions to a server device for net games which is communicably connected to a plurality of terminal devices used by users via a network for managing a game played in a game space by the users using the terminal devices, as detecting means for detecting users who are accessing using the terminal devices, and as pairing deciding means for deciding the pairing in the games for the users whose access was detected in the detecting step, and sequentially deciding the pairing in the following games for users who won the games played according to the decided pairing in the games.

In other words, users who are accessing using the terminal devices are detected by the server device for net games, the pairing in the games is decided for the detected users, games are played according to the decided pairing in the games, and the pairing in the following games is sequentially decided for the users who won the game as a result. Therefore the user to be an opponent is always in access status, so the game can be played immediately, and the winner of each game can be decided in a short time. Also for the users who won, the pairing of the next game is decided immediately, so the games can be sequentially played and many games can be played consecutively in a short time. As a result, a winner of each game can be decided from the many users in a short time, and many games can be played consecutively in a short time, so a winner can be decided from many users in a short time without wasting the time of the user.

Although the present invention has been fully described by way of example with reference to the accompanying drawings, it is to be understood that various changes and modifications will be apparent to those skilled in the art. Therefore, unless otherwise such changes and modifications depart from the scope of the present invention hereinafter defined, they should be construed as being included therein.

## Claims

1. A server device for net games which is communicably connected to a plurality of terminal devices used by users via a network for managing a game played in a game space by the users using said terminal devices, the server device comprising:
detecting means for detecting users who are accessing using said terminal devices; and
pairing deciding means for deciding the pairing in the games for the users whose access has been detected by said detecting means, and sequentially deciding the pairing in the following games for users who won the games played according to the decided pairing in the games.

2. The server device for net games according to Claim 1, wherein said pairing deciding means does not make the pairing in the games for users who select to suspend a game, out of the users whose access has been detected by said detecting means.

3. The server device for net games according to Claim 1 or Claim 2, further comprising winner deciding means which, as the result of the games played according to the pairing in the games decided by said pairing deciding means, decides a user who won the largest number of games as a winner.

4. The server device for net games according to one of Claims 1 to 3, further comprising:
league creating means for deciding a predetermined number of users from a plurality of users who have accessed using said terminal devices as league members, and sequentially creating a league which consists of the decided league members; and
schedule deciding means for deciding a schedule of league baseball games so that each league member of the league created by said league creating means plays at least one game with all the other league members,
wherein said pairing deciding means decides the pairing in the games for the users whose access was detected by said detecting means out of the users who became winners of the league baseball games for which the schedule was decided by said schedule deciding means, and sequentially deciding the pairing in the following games for the users who won the games played according to the decided pairing in the games.

5. A net game management method using a server device for net games which is communicably connected to a plurality of terminal devices used by users via a network for managing a game played in a game space by the users using said terminal devices, comprising:
a detecting step for said server device for net games to detect users who are accessing using said terminal devices; and
pairing deciding means for said server device for net games to decide the pairing in the games for the users whose access was detected in said detecting step, and to sequentially decide the pairing in the following games for users who won the game played according to the decided pairing in the games.

6. A net game management program for causing a server device for net games, which is communicably connected to a plurality of terminal devices used by users via a network for managing a game played in a game space by the users using said terminal devices, to function as:
detecting means for detecting users who are accessing using said terminal devices; and
pairing deciding means for deciding the pairing in the games for users whose access was detected by said detecting means, and sequentially deciding the pairing in the following games for users who won the games played according to the decided pairing in the games.

7. A recording medium which stores a net game management program, said net game management causing a server device for net games, which is communicably connected to a plurality of terminal devices used by users via a network for managing a game played in a game space by the users using said terminal devices, to function as:
detecting means for detecting users who are accessing using said terminal devices; and
pairing deciding means for deciding the pairing in the games for users whose access was detected by said detecting means, and sequentially deciding the pairing in the following games for users who won the games played according to the decided pairing in the games.
